(19) Europäisches Patentamt
European Patent Office
Office européen des brevets

(11) **EP 3 129 818 B1**

(12) **EUROPÄISCHE PATENTSCHRIFT**

(45) Veröffentlichungstag und Bekanntmachung des Hinweises auf die Patenterteilung:
**20.01.2021   Patentblatt 2021/03**

(21) Anmeldenummer: **15712631.9**

(22) Anmeldetag: **27.03.2015**

(51) Int Cl.:
*G02B 21/06* (2006.01)    *G02B 21/00* (2006.01)
*G02B 21/16* (2006.01)    *G02B 21/34* (2006.01)
*G02B 21/36* (2006.01)

(86) Internationale Anmeldenummer:
**PCT/EP2015/056689**

(87) Internationale Veröffentlichungsnummer:
**WO 2015/155027 (15.10.2015 Gazette 2015/41)**

(54) **ANORDNUNG ZUR LICHTBLATTMIKROSKOPIE**

ARRANGEMENT FOR LIGHT SHEET MICROSCOPY

DISPOSITIF DE MICROSCOPIE À FEUILLE DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2014   DE 102014104977**

(43) Veröffentlichungstag der Anmeldung:
**15.02.2017   Patentblatt 2017/07**

(73) Patentinhaber: **Carl Zeiss Microscopy GmbH**
**07745 Jena (DE)**

(72) Erfinder: **PRETORIUS, Marco**
**73447 Oberkochen (DE)**

(74) Vertreter: **Gleim Petri Oehmke Patent- und Rechtsanwaltspartnerschaft mbB**
**Neugasse 13**
**07743 Jena (DE)**

(56) Entgegenhaltungen:
WO-A2-2010/014244    WO-A2-2012/110488
WO-A2-2012/122027    DE-A1-102013 101 711
DE-A1-102013 107 297    DE-B3-102012 101 262

## Beschreibung

### Gebiet der Erfindung

Die Erfindung betrifft eine Anordnung zur Lichtblattmikroskopie. Eine solche Anordnung umfasst eine Beleuchtungsoptik mit einem Beleuchtungsobjektiv zur Beleuchtung einer auf einem Probenträger in einem Medium befindlichen Probe über einen Beleuchtungsstrahlengang. Die Beleuchtung erfolgt mit einem Lichtblatt. Dabei liegen die optische Achse des Beleuchtungsobjektivs und das Lichtblatt in einer Ebene, welche mit der Normalen einer ebenen Bezugsfläche, hinsichtlich welcher sich der Probenträger - gelegentlich auch als Probengefäß mit seitlichen Wänden zur Aufnahme von Flüssigkeiten ausgestaltet - ausgerichtet ist, einen von Null verschiedenen Beleuchtungswinkel einschließt. Außerdem umfasst die Anordnung eine Detektionsoptik mit einem Detektionsobjektiv in einem Detektionsstrahlengang. Auch hier schließt die optische Achse des Detektionsobjektivs mit der Normalen der Bezugsfläche einen von Null verschiedenen Detektionswinkel ein. Darüber hinaus umfasst die Anordnung auch ein Trennschichtsystem mit mindestens einer Schicht aus einem vorgegebenen Material mit vorgegebener Dicke, welche das Medium von dem Beleuchtungsobjektiv und dem Detektionsobjektiv trennt. Das Trennschichtsystem ist dabei mit einer Grundfläche parallel zur Bezugsfläche ausgerichtet und steht mit dieser Grundfläche zumindest zu dem für das Beleuchtungs- und das Detektionsobjektiv für Beleuchtung bzw. Detektion zugänglichen Bereich mit dem Medium in Kontakt.

### Stand der Technik

Bei dem Trennschichtsystem kann es sich im einfachsten Fall um eine Luftschicht handeln, welche die Objektive vom Medium trennt. Oft wird es sich bei Trennschichtsystem um den Boden des Probengefäßes oder des Probenträgers handeln, wenn die Objektive darunter angeordnet sind. In äquivalenter Weise kann es sich auch um eine entsprechende Abdeckplatte oder Abdeckglas mit jeweils einer Luftschicht, die den Boden bzw. das Deckglas vom Objektiv trennt, handeln. Sind die Objektive als Immersionsobjektive ausgestaltet, so befindet sich zwischen Deckglas und Boden des Probengefäßes das Immersionsmedium anstelle von Luft.

Üblicherweise sind Beleuchtungs- und Detektionsobjektiv als zwei verschiedene Objektive ausgestaltet. Sie können aber auch als sogenanntes Doppelobjektiv ausgestaltet sein, wie es beispielsweise in der EP 0 866 993 B1 beschrieben ist. Beide Objektive sind dann in einer gemeinsamen Baueinheit zusammengefasst, die jeweiligen Optiken - d.h. die Objektive mit zugehörigen Strahlengängen und darin angeordneten optischen Elementen - teilen sich dann einige Elemente.

Die Erfindung betrifft demnach insbesondere ein Mikroskopobjektiv für die Lichtblattmikroskopie, welches insbesondere bei einer solchen Anordnung als Detektionsobjektiv und / oder als Beleuchtungsobjektiv eingesetzt werden kann. Ein solches Mikroskopobjektiv umfasst eine erste Linsengruppe, welche ein objektseitiges Bildfeld ins Unendliche abbildet und eine zweite Linsengruppe, welche afokal ausgebildet ist und einen kollimierten Strahlengang in eine Zwischenbildebene abbildet. Die erste Linsengruppe bildet die von der Probe ausgehenden und nach Durchtritt durch das Trennschichtsystem mit den Störeinflüssen dieses Trennschichtsystems - welches beispielsweise das Deckglas und ein Immersionsmedium umfassen kann - beaufschlagten Wellenfronten näherungsweise nach Unendlich ab, erzeugt also einen im Wesentlichen kollimierten Strahlengang. Das Mikroskopobjektiv umfasst außerdem eine zweite Linsengruppe, welche afokal ausgebildet ist und den kollimierten Strahlengang in eine Zwischenbildebene abbildet, in welches sich beispielsweise ein Detektor befinden kann. Alternativ kann das Zwischenbild auch von einer dritten Linsengruppe, beispielsweise einem Tubuslinsensystem aufgenommen und abgebildet werden. Erste und zweite Linsengruppe bilden das Grundobjektiv. Zwischen der ersten und der zweiten Linsengruppe ist außerdem eine Aperturblende angeordnet, steht also in dem näherungsweise kollimierten Strahlengang bzw. einer Pupillenebene. Sie wird von der ersten Linsengruppe in den Objektraum nach Unendlich abgebildet, so dass objektseitig ein zumindest näherungsweise telezentrischer Strahlengang ausgebildet ist.

Eine solche Anordnung, wie sie vorangehend beschrieben wurde, wird insbesondere bei der Untersuchung von biologischen Proben eingesetzt, bei der die Beleuchtung der Proben mit einem Lichtblatt, dessen Ebene die optische Achse der Detektion in einem von Null verschiedenen Winkel schneidet, erfolgt. Üblicherweise schließt dabei das Lichtblatt mit der Detektionsrichtung, die in der Regel der optischen Achse des Detektionsobjektivs entspricht, einen rechten Winkel ein. Mit dieser auch als SPIM (*Selective Plane Illumination Microscopy*) bezeichneten Technik lassen sich in relativ kurzer Zeit räumliche Aufnahmen auch dickerer Proben erstellen. Auf der Basis von optischen Schnitten kombiniert mit einer Relativbewegung in einer Richtung senkrecht zur Schnittebene ist eine bildliche, räumlich ausgedehnte Darstellung der Probe möglich.

Die SPIM-Technik wird bevorzugt in der Fluoreszenzmikroskopie eingesetzt, in diesem Zusammenhang bezeichnet man sie auch als LSFM (*Light Sheet Fluorescence Microscopy*). Die Probe wird dabei in lateraler Richtung gleichmäßig ausgeleuchtet, in der Richtung senkrecht zum Lichtblatt ist dann eine selektive, d.h. mit geringer Schärfentiefe verbundene Abbildung möglich. Gegenüber anderen etablierten Verfahren wie der konfokalen Laser-Scanning-Mikroskopie oder der Zwei-Photonen-Mikroskopie weist die LSFM-Technik mehrere Vorzüge auf: Da die Detektion im Weitfeld erfolgen kann, lassen sich größere Probenbereiche erfassen. Zwar ist die Auflösung etwas geringer als bei der konfokalen Laser-Scanning-Mikroskopie, jedoch lassen sich mit der LSFM-Technik dickere Proben analysieren, da die Eindringtiefe höher ist. Darüber hinaus ist die Lichtbelastung der Proben bei diesem Verfahren am geringsten, was unter anderem die Gefahr des Ausbleichens der Probe reduziert, da die Probe nur durch ein dünnes Lichtblatt in einem von Null verschiedenen Winkel zur Detektionsrichtung beleuchtet wird.

Dabei kann sowohl ein statisches Lichtblatt, welches beispielsweise mit Hilfe von Zylinderlinsen erzeugt wird, verwendet werden, als auch ein quasi-statisches Lichtblatt. Dieses kann erzeugt werden, indem die Probe mit einem Lichtstrahl schnell abgetastet wird. Die lichtblattartige Beleuchtung entsteht, indem der Lichtstrahl einer sehr schnellen Relativbewegung zu der beobachteten Probe unterworfen und dabei zeitlich aufeinanderfolgend mehrfach aneinandergereiht wird. Dabei wird die Integrationszeit der Kamera, auf deren Sensor die Probe letztendlich abgebildet wird, so gewählt, dass die Abtastung innerhalb der Integrationszeit abgeschlossen wird. Anstelle einer Kamera mit einem zweidimensionalen Sensorfeld kann auch ein Zeilensensor in Kombination mit einem erneuten Abtasten in der Detektionsoptik verwendet werden. Die Detektion kann außerdem auch konfokal erfolgen.

Die SPIM-Technik ist in der Literatur inzwischen vielfach beschrieben, so beispielweise in der DE 102 57 423 A1 und der darauf aufbauenden WO 2004/052558 A1 oder in dem Übersichtartikel "Selective Plane Illumination Microscopy Techniques in Developmental Biology" von J. Huisken et al., erschienen in der Zeitschrift Development Bd. 336, S.63 im Jahr 2009.

Eine der Hauptanwendungen der Lichtblattmikroskopie liegt in der Bildgebung mittelgroßer Organismen mit einer Größe von einigen 100 μm bis hin zu wenigen mm. In der Regel werden diese Organismen in ein Agarose-Gel eingebettet, welches sich wiederum in einer Glaskapillare befindet. Diese Glaskapillare wird in eine wassergefüllte Probenkammer eingebracht und die Probe wird dann ein Stück aus der Kapillare herausgedrückt. Die Probe in der Agarose wird anschließend mit einem Lichtblatt beleuchtet und die Fluoreszenz mit einem Detektionsobjektiv, welches senkrecht zum Lichtblatt und damit auch senkrecht zur optischen Achse des Beleuchtungsobjektivs steht, auf eine Kamera abgebildet.

Diese Vorgehensweise hat jedoch einige Nachteile. Zum einen sind die untersuchenden Proben relativ groß, sie stammen aus der Entwicklungsbiologie. Ihre Präparation in speziellen Zylinderröhrchen, die mit Agarose-Gel gefüllt sind, ist aufwendig und stört die normalen Laborabläufe. Sie ist nicht kompatibel zu Standard-Proben-Präparationen und zu Standard-Proben-Halterungen. Der unvermeidbare Brechungsindexunterschied zwischen dem Zylinderröhrchen aus Glas oder Kunststoff und dem Agarose-Gel führt außerdem zu optischen Aberrationen, die das Auflösungsvermögen beeinträchtigen können. Außerdem ist aufgrund der Probenpräparation und der Abmessungen der Probenkammer das Lichtblatt relativ dick und somit die erzielbare axiale Auflösung eingeschränkt.

Um diese Einschränkungen zumindest teilweise umgehen zu können wurde in den letzten Jahren ein SPIM-Aufbau realisiert, bei dem das Beleuchtungsobjektiv und das Detektionsobjektiv senkrecht zueinander stehen und unter einem Winkel von jeweils 45° von oben auf die Probe gerichtet sind. Zieht man als Bezugsfläche beispielsweise die Ebene eines Tisches heran, auf dem das Probengefäß gelagert ist, oder eine andere, meist horizontale Ebene, wie die eines Deckglases oder des Bodens des Probengefäßes, so betragen der Beleuchtungswinkel und der Detektionswinkel jeweils 45°. Ein solcher Aufbau wird beispielsweise in der WO 2012/110488 A1 und in der WO 2012/122027 A1 beschrieben.

Bei solchen Aufbauten befindet sich die Probe beispielsweise auf dem Boden eines als Petrischale ausgestalteten Probenträgers bzw. Progengefäßes. Die Petrischale ist mit Wasser oder Nährlösung gefüllt, Beleuchtungsobjektiv und Detektionsobjektiv werden in die Flüssigkeit eingetaucht. Das Wasser übernimmt dabei auch die Funktion einer Immersionsflüssigkeit. Dieser Ansatz bietet den Vorteil einer höheren Auflösung in axialer Richtung, da ein dünneres Lichtblatt erzeugt werden kann. Aufgrund der höheren Auflösung können dann auch kleinere Proben untersucht werden, auch ist die Probenpräparation einfacher geworden. Sie entspricht jedoch weiterhin nicht dem Standard, ebenso wenig werden für die Untersuchung von einzelnen Zellen in der Fluoreszenzmikroskopie Petrischalen verwendet. Diese muss relativ groß sein, damit die beiden Objektive in die Schale eingetaucht werden können, ohne an den Rand der Schale anzustoßen. Mikrotiterplatten - auch als *Multi-Well*-Platten bezeichnet -, welche Standard in vielen Bereichen der Biologie sind und gerade auch bei der fluoreszenzmikroskopischen Analyse einzelner Zellen eingesetzt werden, können mit diesem Verfahren nicht verwendet werden, da die Objektive nicht in die sehr kleinen Vertiefungen, welche rasterförmig auf der Platte angeordnet sind, eintauchen können. Ein weiterer Nachteil besteht darin, dass mit diesem Aufbau eine Analyse einer Vielzahl von Proben in kurzer Zeit - ein sogenanntes *High-Throughput-Screening* - nicht ohne weiteres möglich ist, da die Objektive beim Wechseln der Probe gereinigt werden müssen, um Kontaminierungen der verschiedenen Proben zu vermeiden. Bei Anordnungen, wie sie im Stand der Technik bekannt sind, ist ferner zur Änderung der Fokuslage eine Relativverschiebung zwischen Probe und Objektiv erforderlich. Durch die entsprechende Bewegung können die zu untersuchenden Probenbestandteile aufschwimmen und schlimmstenfalls sogar komplett das Beobachtungsfeld verlassen.

Ein Weg zur Beseitigung dieser Nachteile liegt darin, auf der einen Seite die Konfiguration von einem Beleuchtungswinkel und einem Detektionswinkel von jeweils 45° beizubehalten, jedoch die Probe samt umgebendem Medium von der Umgebung abzukapseln. Eine Möglichkeit besteht darin, die beiden Objektive nicht von oben auf die Probe zu richten, sondern nach Art eines inversen Mikroskops von unten, wo Beleuchtung und Detektion durch den transparenten Boden des Probengefäßes erfolgen. Dieser transparente Gefäßboden - beispielsweise einer Petrischale oder eines Objektträgers - zusammen mit der Flüssigkeits- oder Luftschicht, die sich zwischen Boden und Objektiven befindet, bildet dann das Trennschichtsystem. Äquivalent kann die Detektion auch weiterhin von oben erfolgen, sofern das Probengefäß mittels eines transparenten Deckels abgedeckt ist, oder auch ohne einen solchen Deckel - in diesem Fall besteht das Trennschichtsystem nur aus einer Luftschicht um die Abkapselung zu gewährleisten. Auf diese Weise können alle typischen Probengefäße, beispielsweise auch Mikrotiterplatten, Petrischalen und Objektträger benutzt werden. Insbesondere kann auch eine Kontaminierung der Probe bei einer Analyse mit hohem Durchsatz vermieden werden.

Dieser Vorteil wird jedoch mit einem weiteren, schwerwiegenden Nachteil erkauft, da es aufgrund der Verwendung des Trennschichtsystems - beispielsweise des Deckglases oder des Gefäßbodens mit anschließender Luft- oder Immersionsmediumsschicht - schon bei geringen numerischen Aperturen von beispielsweise NA = 0,3 zu extremen Abbildungsfehlern wie sphärischer Aberration und Koma aufgrund des schrägen Durchgangs von zu detektierendem Licht oder Beleuchtungslicht durch das Trennschichtsystem mit seinem Grenzflächen kommt und somit eine korrekte Bildgebung bei Nutzung von rotationssymmetrischen Standardobjektiven nicht mehr möglich ist.

Um dieses Problem zu beseitigen, sind im Stand der Technik Anordnungen bekannt, die als Übertragungsoptiken bzw. Relayoptiken bezeichnet werden. Eine solche ist beispielsweise in der DE 10 2011 000 835 A1 beschrieben. Eine symmetrische Übertragungsoptik bildet ein komplettes Probenvolumen, d.h. die Gesamtheit aller in dem Probenvolumen liegenden achsensenkrechten Ebenen, auf die entsprechenden, konjugierten Bildebenen ab, und erlaubt es, dabei gleichzeitig, ein Deckglas oder ein sonstiges Medium bzw. das Trennschichtsystem im Objekt- und im Bildraum symmetrisch im Strahlengang zu platzieren, so dass keine Abbildungsfehler hervorgerufen werden.

Nachteilig bei der Verwendung einer solchen Übertragungsoptik ist, dass diese eine extrem hohe numerische Apertur (NA) aufweisen muss, damit sie den Abbildungsstrahlengang und den dazu typischerweise rechtwinklig verlaufenden Beleuchtungsstrahlengang gleichzeitig übertragen kann. Für eine hohe numerische Apertur des Abbildungsstrahlengangs in der Größenordnung NA = 1,0 nähert sich die erforderliche numerische Apertur der Übertragungsoptik rasch dem Brechungsindex des umgebenden Mediums an; die zu übertragenden Strahlenbündel bilden also nahezu einen Kegel von 180° um die Apertur des Abbildungsobjektivs und die Apertur des Beleuchtungsobjektivs gleichzeitig übertragen zu können. Dies macht derartige Relayoptiken technisch sehr aufwendig, die Optiken umfassen eine große Anzahl von optischen Elementen. Dies macht sie außerordentlich groß, teuer und schwer; zudem wird die Gesamttransmission des Systems aufgrund der hohen Anzahl von optischen Grenzflächen stark verringert. Darüber hinaus sind die optischen Oberflächen wegen der bei hohen numerischen Aperturen unvermeidbar großen Einfallswinkel der Strahlen an den optisch wirksamen Flächen außerordentlich empfindlich gegen Toleranzen bei der Herstellung und Justierung der Komponenten.

Ein weiterer Ansatz zur Eliminierung der Einflüsse eines schräg durchtretenden Deckglases besteht in der Verwendung einer als "virtuelles Relay" bezeichneten, relativ zur Normalen der Begrenzungsfläche rotationssymmetrisch ausgeführten Korrekturoptik, die auf der einen Seite in das Immersionsmedium eintaucht und auf der anderen Seite gegen Luft ansteht, und die das Objekt mit einem lateralen Abbildungsmaßstab vom Immersionsmedium in den Luftraum abbildet, welcher exakt gleich dem Verhältnis der Brechungsindizes von Immersionsmedium zu Luft ist. Ein solcher Ansatz ist beispielsweise in der DE 10 2013 112 690.6 beschrieben. Nachteilig an diesem Konzept ist, dass die Korrektur nur für eine feste Dicke der mindestens einen Schicht des Trennschichtsystems, d.h. des Objektträgers bzw. der Platte, die den Gefäßboden oder das Deckglas bildet, genau ist. Für variable Deckglasdicken ist die Korrektur unvollständig. Die zusätzliche Baugruppe benötigt darüber hinaus viel Platz zwischen Probe bzw. Deckglas und den eigentlichen Objektiven für die Detektion und Beleuchtung. Letztere müssen daher auf einen besonders großen Arbeitsabstand ausgelegt sein, was die Objektive tendenziell groß, technisch aufwendig und teuer macht und die Korrektur auf eine beugungsbegrenzte Bildgüte stark erschwert.

In der DE 10 2013 107 297.6 werden zur Beseitigung dieser Nachteile Korrekturmittel in Form von Korrekturlinsen oder Linsengruppen vorgeschlagen, welche in das Beleuchtungsobjektiv und / oder in das Detektionsobjektiv integriert werden können. Als Korrekturlinsen werden dort unter anderem Zylinderlinsen oder nicht axial angeordnete Linsen vorgeschlagen. Die Korrekturlinsen können dabei auch solche Elemente mit asphärischen Flächen oder mit Freiformflächen umfassen. Außerdem werden für den Objektträger Materialien verwendet, die annähernd den Brechungsindex des Mediums, in welchem sich die Probe befindet - beispielsweise Wasser oder eine Nährflüssigkeit - haben, wobei zur Beseitigung weiterer Fehler adaptive optische Elemente zur Manipulation der Phasenfronten des Beleuchtungs- und / oder des Detektionslichts vorgeschlagen werden. Konkrete Angaben, wie solche Korrekturmittel ausgestaltet werden können, werden jedoch nicht gemacht. Die vorgeschlagenen Korrekturlinsen sind dabei zudem im Objektiv erst hinter der Frontlinse angeordnet, was eine Nachrüstung bestehender Objektive erschwert.

Abgesehen von der Relayoptik ist keines der beschriebenen Systeme in der Lage, Fehler auszugleichen, welche aufgrund von verschieden dicken Deckgläsern und / oder bei verschiedenen Anstellwinkeln für das Beleuchtungs- bzw. Detektionsobjektiv - gemeint sind der Beleuchtungswinkel und der Detektionswinkel - auftreten können. Bei der Verwendung einer Relayoptik kommt jedoch hinzu, dass bildseitig eine äquivalente Konfiguration hinsichtlich der verwendeten Medien und Deckgläser sowie des Anstellwinkels notwendig ist. Dies macht den praktischen Einsatz sehr aufwendig, da für eine genaue Korrektur jedes Deckglas und jeder Anstellwinkel genauestens bestimmt werden müssten und dann ein entsprechendes Deckglas bildseitig eingesetzt werden müsste. Schwankungen in der Dicke eines Deckglases auszugleichen, wenn beispielsweise eine andere Probenposition angefahren wird, ist dann jedoch nahezu unmöglich, da nicht davon auszugehen ist, dass zwei beliebige Deckgläser einen gleichen Dickenverlauf haben.

**Beschreibung der Erfindung**

Aufgabe der Erfindung ist es daher, eine möglichst kompakte und preiswerte Lösung zur Korrektur solcher Abbildungsfehler, die aufgrund des schiefen Durchgangs von Beleuchtungslicht und Detektionslicht durch den Objektträger, den Boden des Probengefäßes oder ein Deckglas entstehen, durch ein möglichst einfaches Korrekturelement bereitzustellen, welches darüber hinaus in der Lage sein soll, verschiedene Deckglasdicken und / oder verschiedene Anstellwinkel bei der Korrektur zu berücksichtigen. Vorteilhaft soll auch die weitere Verwendung bereits vorhandener Objektive ermöglicht werden.

Diese Aufgabe wird für eine Anordnung zur Lichtblattmikroskopie der eingangs beschriebenen Art dadurch gelöst, dass das Detektionsobjektiv ein im Strahlengang angeordnetes oder in diesem einbringbares erstes adaptives optisches Detektionskorrekturelement umfasst und / oder das Beleuchtungsobjektiv ein im Strahlengang angeordnetes oder in dieses einbringbares erstes adaptives optisches Beleuchtungskorrekturelement umfasst. Sowohl mit dem ersten Beleuchtungskorrekturelement als auch mit dem ersten Detektionskorrekturelement können Aberrationen, die aufgrund des schrägen Durchtritts von zu detektierendem Licht bzw. von Licht zur Beleuchtung der Probe durch Grenzflächen des Trennschichtsystems auftreten für einen vorgegebenen Bereich von Detektions- bzw. von Beleuchtungswinkeln verringert werden. Alternativ oder in Ergänzung können solche Aberrationen, die beim schrägen Durchtritt des Lichts auftreten, für einen vorgegebenen Bereich von der Dicke der mindestens einen Schicht des Trennschichtsystems, verringert werden. Dies lässt sich auf verschiedene Weise realisieren.

Ein typischer vorgegebener Bereich für die Dicke eines Deckglases umfasst beispielsweise $\pm 30\ \mu m$ um eine mittlere Dicke von beispielsweise $170\ \mu m$. Innerhalb dieses Bereichs lassen sich durch das erste Detektionskorrekturelement bei typischen Detektionsobjektiven mit einer numerischen Apertur von NA = 1,0, bzw. durch das erste Beleuchtungskorrekturelement die genannten Aberrationen vermindern bzw. ausschalten. Auch andere mittlere Dicken für Deckgläser bzw. Probenträger, wie sie handelsüblich sind, können vorgegeben werden, der Dickenbereich kann ebenfalls je nach Konfiguration größer oder kleiner gewählt werden.

Die vorgegebenen Bereiche für Detektions- und Beleuchtungswinkel liegen beispielsweise im Bereich von $\pm 5°$ um die jeweiligen mittleren Anstellwinkel, der für das Detektionsobjektiv mit beispielsweise einer numerischen Apertur im Bereich von 1,0 bei etwa 30° und für das Beleuchtungsobjektiv mit beispielsweise einer numerischen Apertur im Bereich von beispielsweise 0,4 bei etwa 60° liegen kann, wobei die mittleren Anstellwinkel in Abhängigkeit von der Konfiguration der Anordnung auch anders gewählt werden können, und die vorgegebenen Bereiche auch größer oder kleiner sein können.

In einer ersten Ausgestaltung umfasst das Detektionsobjektiv eine erste Detektionslinsengruppe, welche ein objektseitiges Bildfeld mindestens näherungsweise ins Unendliche abbildet, wobei leichte Abweichungen hinsichtlich der Abbildung ins Unendliche zulässig sind. Es umfasst außerdem eine zweite Detektionslinsengruppe. In der Zwischenbildebene kann bereits ein Detektor angeordnet sein, je nach Abbildungseigenschaften der zweiten Detektionslinsengruppe kann das Bild aber auch durch eine weitere Linsengruppe, beispielsweise eine Tubuslinsengruppe, abgebildet werden. Entsprechend umfasst das Beleuchtungsobjektiv, sofern dieses für die Korrektur ausgelegt wird, eine erste Beleuchtungslinsengruppe, welche ein objektseitiges Bildfeld mindestens näherungsweise ins Unendliche abbildet, und eine zweite Beleuchtungslinsengruppe. Dabei muss sowohl im Falle des Detektionsobjektivs als auch im Falle des Beleuchtungsobjektivs der tatsächliche Strahlverlauf im Objektiv zwischen erster und zweiter Linsengruppe nicht unbedingt kollimiert sein, eine näherungsweise Kollimierung trägt jedoch zur Vermeidung induzierter Aberrationen bei.

Sowohl beim Beleuchtungsobjektiv als auch beim Detektionsobjektiv ist bevorzugt jeweils hinter der ersten Linsengruppe eine Aperturblende angeordnet, welche im - näherungsweise - kollimierten Strahlengang steht und von der ersten Linsengruppe in den Objektraum nach Unendlich abgebildet wird, so dass objektseitig bzw. beleuchtungsquellenseitig ein näherungsweise telezentrischer Strahlengang besteht. Das adaptive optische erste Detektionskorrekturelement ist dann zwischen erster und zweiter Detektionslinsengruppe angeordnet bzw. zwischen diese einbringbar, das adaptive optische erste Beleuchtungskorrekturelement ist entsprechend zwischen erster und zweiter Beleuchtungslinsengruppe angeordnet bzw. zwischen diese einbringbar, jeweils bevorzugt in der Nähe einer Aperturblende oder einer Pupillenebene des jeweiligen Mikroskopobjektivs. Sind die Korrekturelemente einbringbar ausgestaltet, so kann das Einbringen beispielsweise durch Einschwenken oder durch Einschrauben erfolgen; die Korrekturelemente sind dann zusätzliche Module für schon bestehende Objektive mit entsprechenden Aufnahmen für solche Elemente.

Die zweite Detektionslinsengruppe kann dabei so ausgestaltet sein, dass sie die korrigierte Wellenfront direkt auf einen Detektor bzw. in eine Zwischenbildebene abbildet. In einer bevorzugten Ausführung ist die zweite Detektionslinsengruppe näherungsweise afokal ausgebildet um eine Schnittstelle zu verschiedenen Tubusoptiken zu realisieren. Entsprechendes lässt sich auf die zweite Beleuchtungslinsengruppe übertragen, auch diese kann in einer bevorzugten Ausführung näherungsweise afokal ausgebildet sein. Die Afokalität muss dabei nicht vollständig erreicht werden, auch eine Abbildung des Strahlengangs in einen leicht konvergenten oder divergenten Strahlverlauf ist zulässig.

Sowohl Beleuchtungsobjektiv als auch Detektionsobjektiv sind besondere, an den jeweiligen Zweck angepasste Ausgestaltungen eines Mikroskopobjektivs, wie es eingangs beschrieben wurde, bei dem zwischen erster Linsengruppe und zweiter Linsengruppe ein erstes adaptives optisches Abbildungskorrekturelement angeordnet oder einbringbar ist, mit welchem Aberrationen, die aufgrund eines schrägen Durchtritts von Licht zur Detektion oder Beleuchtung der Probe durch einen Probenträger entstehen, für einen vorgegebenen Bereich von Anstellwinkeln zur Normalen des Probenträgers und/oder für einen vorgegebenen Bereich von Dicken des Probenträgers verringerbar sind. D.h. es lassen sich solche Aberrationen korrigieren bzw. vermindern, welche aufgrund von Abweichungen von der Dicke eines Deckglases, für welche das Mikroskopobjektiv ausgelegt ist, und / oder aufgrund von Anstellwinkeln, die von 0° bezogen auf eine Normale des Deckglases bzw. des Gefäßbodens oder des Probenträgers abweichen, zustande kommen.

Das erste adaptive optische Korrekturelement bzw. das erste adaptive optische Beleuchtungskorrekturelement sind bevorzugt jeweils als Wellenfrontmanipulatoren ausgebildet. Jeder der Wellenfrontmanipulatoren umfasst bevorzugt zwei lateral zur optischen Achse gegeneinander bewegliche Freiformflächen, wobei mit dem Begriff der optischen Achse hier die primäre optische Achse bezeichnet wird. In einer alternativen Ausgestaltung sind die zwei Freiformflächen gegenläufig um eine zur optischen Achse senkrechte Drehachse, welche die optische Achse schneidet, rotierbar. Diese Ausgestaltung hat den Vorteil, dass der Wellenfrontmanipulator dann nicht zwingend im näherungsweise kollimierten Strahlengang angeordnet sein muss, sondern auch in divergenten oder konvergenten Bereichen des Strahlengangs angeordnet sein kann. Werden mehrere Wellenfrontmanipulatoren verwendet, lassen sich beide Ausgestaltungen auch kombinieren. Das Prinzip eines solchen Wellenfrontmanipulators wird beispielsweise in der DE 10 2012 101 262 B3 beschrieben, deren Offenbarung hier explizit und voll umfänglich mit einbezogen wird, und auf welche insbesondere bezüglich verschiedener Ausgestaltungsmöglichkeiten für einen Wellenfrontmanipulator verwiesen wird. Mit einem Wellenfrontmanipulator lassen sich definiert Abbildungsfehler durch Manipulation der Wellenfront erzeugen, die andere, externe Abbildungsfehler korrigieren.

Die Freiformflächen des Wellenfrontmanipulators können als reine Polynomentwicklung dargestellt werden, d.h. es ist keine Grundkrümmung zu berücksichtigen. Explizit kann die Formel

$$z = \sum_{m,n=1}^{\infty} C_{m,n} x^m y^n \qquad (1)$$

zur Bestimmung der beiden meist identischen Freiformflächen verwendet werden. Für die weiteren Ausführungen wird ohne Beschränkung der Allgemeinheit davon ausgegangen, dass die Verschiebungsrichtung zur y-Achse korrespondiert. Jedoch sind auch Wellenfrontmanipulatoren denkbar, bei denen die Verschiebung in x-Richtung oder in beiden Richtungen erfolgt.

In der einfachsten Ausführungsform umfasst der Wellenfrontmanipulator genau zwei Freiformelemente, welche lateral, d.h. senkrecht zur optischen Systemachse verschoben werden: das eine Element um die Strecke s entlang der positiven y-Richtung, das andere entgegengesetzt gleichzeitig um die Strecke s in die negative y-Richtung. Die beiden Freiformelemente werden also genau gegenläufig und um gleiche Beträge relativ zueinander verschoben. Beide Freiformelemente bestehen im einfachsten Fall aus einer planen Seite und einer Freiformfläche. Die beiden Freiformflächen der Elemente des Wellenfrontmanipulators sind im Regelfall identisch, so dass sich die beiden Freiformelemente in einer Nullposition exakt zu einer planparallelen Platte komplementär ergänzen. Abweichungen davon sind möglich, um nicht-paraxiale Effekte zu berücksichtigen.

Die Profilfunktion der Freiformelemente lässt sich durch eine Funktion beschreiben, die in der Richtung parallel zur Verschiebungsrichtung der Elemente durch eine Stammfunktion - das erste Integral - der gewünschten Wellenfrontänderung und in der Richtung senkrecht dazu durch eine zu der gewünschten Wellenfrontänderungswirkung proportionalen Funktion gegeben ist.

Eine reine Defokussierungswirkung lässt sich beispielsweise erreichen, wenn die Freiformfläche durch ein Polynom dritter Ordnung,

$$z(x, y) = k \cdot (x^2 \cdot y + \frac{y^3}{3}) \qquad (2)$$

beschrieben wird, wobei angenommen wurde, dass die laterale Verschiebung der Elemente entlang der y-Achse erfolgt. Der Parameter k skaliert dabei die Profiltiefe und legt auf diese Weise die erzielbare Brechkraftänderung pro Einheit des lateralen Verschiebungsweges s fest.

Ein Wellenfrontmanipulator zur Erzeugung von primärer sphärischer Aberration lässt sich beispielsweise durch die Profilfunktion

$$z(x, y) = k \cdot (y \cdot x^4 + \frac{2}{3} \cdot (x^2 \cdot y^3) + \frac{y^5}{5}) \qquad (3a)$$

beschreiben. Die Freiformelemente können auch zur Beeinflussung anderer Wellenfrontfehler höherer Ordnung ausgelegt sein. Auch können mehrere Wellenfrontmanipulatoren verschiedener Art hintereinander gekoppelt werden, um so verschiedene Fehler sukzessive zu eliminieren.

Die wichtigsten Aberrationen, die es bei schrägem Durchtritt eines Lichtstrahls durch ein Deckglas bzw. eine Schicht des Trennschichtsystems zu korrigieren gilt, sind Koma und Astigmatismus. Ein Wellenfrontmanipulator zur Erzeugung von primärer Koma lässt sich beispielsweise durch die Profilfunktion

$$z(x, y) = k_1 \cdot \left( \frac{1}{2}(x^2 \cdot y^2) + \frac{y^4}{4} \right) + k_2 \cdot x + k_3 \cdot y \qquad (3b)$$

beschreiben, wenn eine Lateralverschiebung entlang der y-Richtung erfolgt, oder durch die Profilfunktion

$$z(x, y) = k_1 \cdot \left( \frac{x^3 \cdot y}{3} + x \cdot y^3 \right) + k_2 \cdot x + k_3 \cdot y \qquad (3c),$$

wenn eine Lateralverschiebung entlang der x-Richtung erfolgt.

Ein Wellenfrontmanipulator zur Erzeugung von primärem Astigmatismus im y-Schnitt kann beispielsweise mit einem Profil, welches die Profilfunktion

$$z(x, y) = k_1 \cdot \left( \frac{y^3}{3} + x \cdot y^3 \right) + k_2 \cdot y \qquad (3d)$$

aufweist, bereitgestellt werden. Für weitere Einzelheiten wird auf die bereits genannte DE 10 2012 101 262 B3 verwiesen.

Zwischen den gegeneinander beweglichen Freiformflächen des Wellenfrontmanipulators des Mikroskopobjektivs - also des Detektions- und / oder des Beleuchtungsobjektivs - ist in einer bevorzugten Ausgestaltung jeweils ein Immersionsmedium eingebracht. Auf diese Weise ist es möglich, eine vorgegebene Wellenlängenabhängigkeit der Wellenfrontänderung durch den Manipulator einzustellen. Insbesondere kann beispielsweise eine achromatische Wirkung eingestellt werden.

Durch das Immersionsmedium entsteht zwischen den beweglichen Freiformflächen des Wellenfrontmanipulators eine variable Flüssigkeitslinse. Der Wellenfrontmanipulator realisiert dann die Funktion einer achromatischen - eigentlich dichromatischen - Variolinse, welche die sogenannte Achromasiebedingung

$$\frac{n_1 - 1}{v_1} - \frac{n_2 - 1}{v_2} = 0$$

erfüllt. Dabei ist $n_1$ der Brechungsindex der beiden Freiformelemente des Wellenfrontmanipulators und $n_2$ der Brechungsindex des Immersionsmediums, und $v_1$ bzw. $v_2$ sind die entsprechenden, zugehörigen Abbeschen Zahlen, jeweils bei einer mittleren Länge des betrachteten Spektralbereichs. Die Wirkung des Wellenfrontmanipulators ist dann mindestens für diese beiden Wellenlängen identisch, in sehr guter Näherung jedoch auch für alle weiteren in Betracht kommenden Wellenlängen. Mit einem solchen, achromatischen Wellenfrontmanipulator lassen sich Wellenfrontmanipulationen im Wesentlichen ohne Farbfehler vornehmen. Die achromatische Wirkung ist auf diese Weise für alle mit dem Wellenfrontmanipulator einstellbaren Fehler - insbesondere auch für die asymmetrischen Fehler Koma und Astigmatismus gemäß der o.g. Gleichungen (3b)-(3d) - erreichbar.

In der Praxis muss berücksichtigt werden, dass die Auswahl der optischen Materialien beschränkt ist, d.h. man die o.g. Achromasiebedingung in der Regel nur näherungsweise erreicht. Bevorzugt ist daher für die beteiligten Materialien der Ausdruck

$$\left| \frac{n_1 - 1}{v_1} - \frac{n_2 - 1}{v_2} \right|$$

kleiner als 0,05, wobei in einer besonders bevorzugten Ausführung der Ausdruck kleiner als 0,01 ist, hier ist in jedem Falle eine ausreichende Achromatisierung erreicht. Idealerweise sollte der Ausdruck kleiner als 0,001 sein.

Alternativ oder in Ergänzung lässt sich eine klare Trennung zwischen einer Änderung der mittleren Fokuslage einerseits und einer Änderung des Farblängsfehlers andererseits erreichen, wenn die optisch wirksamen Materialien der Freiformelemente der Wellenfrontmanipulatoren einerseits und das Immersionsmedium andererseits nahezu den gleichen Brechungsindex, aber deutlich unterschiedliche Abbesche Zahlen aufweisen. In einer bevorzugten Ausgestaltung der Erfindung erfüllen diese Materialien daher gleichzeitig die Bedingungen $|n_1 - n_2| \leq 0,05$ und $|v_1 - v_2| \geq 5$, besonders bevorzugt gleichzeitig die Bedingungen $|n_1 - n_2| \leq 0,01$ und $|v_1 - v_2| \geq 10$ und idealerweise gleichzeitig die Bedingungen $|n_1 - n_2| \leq 0,002$ und $|v_1 - v_2| \geq 15$. Je größer der Unterschied in der Abbeschen Zahl ausfällt, desto kleiner können die lateralen Verschiebewege und desto flache können die Profile der Freiformelemente gestaltet werden, was deren Fertigung erleichtert. Geeignete Materialkombinationen sind leicht zu finden, da die Dispersion organischer Kohlenwasserstoffe bei typischen Brechzahlen von Glas durchweg höher liegt als die des Glases. Für den Fall, dass die Freiformelemente aus Kunststoff gebildet sind, kommt als Immersionsmedium beispielsweise eine mit Alkali-Ionen dotierte, wässrige Lösung in Betracht.

Für weitere Einzelheiten die Anpassung eines Immersionsmediums zwischen den Freiformelementen betreffend, wird abermals auf die DE 10 2012 101 262 B3 verwiesen, deren Offenbarungsgehalt hier vollständig eingeschlossen wird.

Ist zwischen die gegeneinander beweglichen Freiformflächen des Wellenfrontmanipulators ein Immersionsmedium eingebracht, so sind die zueinander bewegten Freiformelemente flüssigkeitsdicht versiegelt, beispielsweise mit Hilfe einer Manschette aus einer elastischen Kunststofffolie, einer Balgenkonstruktion oder ähnlichem.

Die optischen Elemente, an welchen die Freiformflächen des Wellenfrontmanipulators ausgebildet sind, sind bevorzugt aus einem Material mit anormaler Teildispersion gefertigt, ergänzend oder alternativ weist das Immersionsmedium, sofern vorhanden, einen von der Normalgeraden abweichenden Dispersionsverlauf auf. Die Freiformelemente können also aus Medien gebildet sein, die eine Abweichung der Brechzahldispersion von der Normalgeraden aufweisen. Zu solchen Materialen zählen beispielsweise Langkron- oder Kurzflintgläser. Dadurch lassen sich sekundäre chromatische Aberrationen gezielt einstellen bzw. korrigieren. Solche sekundären Farbfehler lassen sich auch durch mehrere Linsen normalerweise nur dann korrigieren, wenn mindestens eine dieser Linsen aus einem solchen Glas mit anormaler Teildispersion gebildet ist. Solche Gläser weisen jedoch zahlreiche Nachteile und unterwünschte Eigenschaften auf. Insbesondere sind sie vergleichsweise teuer und nur schwer zu bearbeiten, da sie chemisch sehr empfindlich gegen alkalische oder säurehaltige Schleif- und Poliermittel sind. Im Gegensatz dazu können hier die Freiformelemente aus preiswerten, säureresistenten Normalgläsern gebildet werden, während als Immersionsmedium zwischen den Freiformelementen ein organischer Kohlenwasserstoff verwendet werden kann, der eine Abweichung im Dispersionsverhalten von der Normalgeraden aufweist und daher geeignet ist, sekundäre Farbfehler zu korrigieren. Mit Hilfe des Wellenfrontmanipulators lässt sich eine Korrektur des sekundären Spektrums somit auf alternativem Wege nur mit Normalgläsern erreichen, also solchen Gläsern, die auf der Normalgeraden im Abbe-Diagramm liegen.

Wie bereits erwähnt, ist die zweite Linsengruppe des Mikroskopobjektivs - dies trifft für Detektionsobjektiv und Beleuchtungsobjektiv gleichermaßen zu -, welche auf der dem Beobachter bzw. der Beleuchtungsquelle zugewandten Seite des Wellenfrontmanipulators angeordnet ist, in einer bevorzugten Ausgestaltung näherungsweise afokal ausgebildet, damit verschiedene Grundobjektive und verschiedene Mikroskop-Tubus-Systeme frei miteinander kombiniert werden können. Es handelt sich um eine sogenannte "Unendlich-Schnittstelle". In diesem Fall ist insbesondere für das Detektionsobjektiv hinter der zweiten Detektionslinsengruppe, also auf der dem Objekt abgewandten Seite, noch eine dritte Linsengruppe angeordnet, wenn die zweite Linsengruppe näherungsweise afokal ausgebildet ist. Im Falle des Detektionsobjektivs ist diese als Tubuslinsengruppe ausgebildet, zusammen erzeugen alle drei Linsengruppen des Detektionsobjektivs ein reelles Zwischenbild, welches entweder visuell vergrößert betrachtet oder von einer entsprechenden Detektionseinrichtung wie einer Digitalkamera aufgenommen werden kann. Entsprechendes lässt sich auch für das Beleuchtungsobjektiv realisieren, sofern erforderlich. Die zweite Linsengruppe des Mikroskopobjektivs kann aber auch so ausgestaltet sein, dass sie direkt, ohne eine Tubuslinsengruppe, die korrigierte Wellenfront auf einen Detektor oder eine Zwischenbildebene abbildet.

Das erste adaptive optische Detektionskorrekturelement bzw. das erste adaptive optische Beleuchtungskorrekturelement, welche beide als Wellenfrontmanipulatoren ausgestaltet sind, können fest im Strahlengang ihres jeweiligen Objektivs angeordnet sein. Alternativ können sie auch in den Strahlengang einbringbar sein, beispielsweise nach Art eines zuschaltbaren oder einschiebbaren Moduls. Die Wellenfrontmanipulatoren kompensieren in diesem Fall sämtliche optischen Störeinflüsse einer Schicht variabler Dicke im Trennschichtsystem - beispielsweise eines Deckglases variabler Dicke - und / oder variable Anstellwinkel für das Objektiv zwischen Objektivachse und Flächennormale der Bezugsfläche, welche mit der Flächennormalen beispielsweise des Deckglases zusammenfällt. Die Stellbereiche der Wellenfrontmanipulatoren sind in diesem Fall asymmetrisch. Das zugrundeliegende Mikroskopobjektiv - entweder das Beleuchtungsobjektiv oder das Detektionsobjektiv - ohne den Manipulator kann dabei vollständig rotationssymmetrisch ausgestaltet sein, so dass es ohne weitere Modifikationen auch für normale mikroskopische Anwendungen, bei denen kein Bruch der Rotationssymmetrie, wie er durch den schrägen Anstellwinkel verursacht wird, vorliegt, eingesetzt werden kann. Die komplette Korrektur aller Einflüsse des schräg durchtretenen Deckglases bzw. Trennschichtsystems wird durch den mit asymmetrischen Stellwinkeln betriebenen Wellenfrontmanipulator gewährleistet. Der Wellenfrontmanipulator kann sowohl für das Beleuchtungsobjektiv als auch für das Detektionsobjektiv für SPIM-Anwendungen somit als Zusatzmodul an einer dafür vorgesehenen Stelle im Bereich zwischen erster und zweiter Linsengruppe, d.h. entweder zwischen erster Detektionslinsengruppe und zweiter Detektionslinsengruppe oder zwischen erster Beleuchtungslinsengruppe und zweiter Beleuchtungslinsengruppe, im Bereich des kollimierten Strahlengangs in das Grundobjektiv eingebaut oder eingeschwenkt werden. Für übliche mikroskopische Zwecke kann der Wellenfrontmanipulator ausgebaut oder ausgeschwenkt werden. Dies ist insofern vorteilhaft, als auf diese Weise die Variantenvielfalt von benötigten Objektiven begrenzt werden kann.

Die Korrekturfunktion kann auch auf zwei oder mehr optische Elemente aufgeteilt werden. Das Detektionsobjektiv umfasst in diesem Fall bevorzugt zusätzlich zu dem ersten adaptiven optischen Detektionskorrekturelement eine Korrekturlinse zur Korrektur von Aberrationen bei vorgegebenem Detektionswinkel und vorgegebener Dicke der Schicht des Trennschichtsystems. Die Detektionskorrekturlinse ist bevorzugt mit mindestens einer Freiformfläche ausgebildet. Sie kann die Frontlinse bilden, aber auch als in den Strahlengang an anderer Stelle - beispielsweise im Bereich der Wellenfrontmanipulatoren - einschwenkbare Linse ausgestaltet sein. Entsprechend umfasst das Beleuchtungsobjektiv ergänzend oder alternativ eine Beleuchtungskorrekturlinse zur Korrektur von Aberrationen bei vorgegebenem Beleuchtungswinkel und vorgebebener Dicke der Schicht des Trennschichtsystems. Auch diese ist bevorzugt als Freiformlinse ausgebildet, sie kann ebenfalls als in den Strahlengang einschwenkbare Linse ausgestaltet sein. In diesem Fall ist das erste adaptive optische Detektionskorrekturelement bzw. das erste adaptive optische Beleuchtungskorrekturelement eingeschränkt nur zur Korrektur von Aberrationen ausgelegt, welche aufgrund von Abweichungen von der vorgegeben Dicke und / oder von einem vorgegebenen Anstellwinkeln auftreten. Die optischen Störeinflüsse bei festen Nominalwerten von der Schichtdicke der mindestens einen Schicht des Trennschichtsystems, beispielsweise dem Deckglas, und vom Anstellwinkel der primären Objektivachse zur Normalen der Bezugsfläche werden durch eine statische Korrekturlinse kompensiert. Dabei kann es sich auch um eine zur Normalen der Bezugflächen rotationssymmetrische Linse, aber auch um eine Freiformlinse handeln. Die optischen Einflüsse, die aus den Schwankungen der Schichtdicke und der Anstellwinkel um diese Nominalwerte herum entstehen, werden durch das erste adaptive optische Detektions- bzw. Beleuchtungskorrekturelement kompensiert. Bei Verwendung eines Wellenfrontmanipulators, wie er vorangehend schon beschrieben wurde, ist dieser dann so ausgelegt, dass die Stellwege dieses Wellenfrontmanipulators im wesentlichen symmetrisch um eine Nulllage herum sind, wenn sich die Deckglasparameter um ihre Nominalwerte herum ebenfalls symmetrisch ändern.

Die Freiformflächen der Detektionskorrekturlinse bzw. der Beleuchtungskorrekturlinse wird dabei durch eine Gleichung der Form

$$z = \frac{(x^2 + y^2)/R}{1 + \sqrt{1 - (1+k) \cdot \dfrac{(x^2 + y^2)}{R^2}}} + \sum_{m,n=1}^{\infty} C_{m,n} x^m y^n \qquad (4)$$

beschrieben. k ist dabei die sogenannte konische Konstante, R bezeichnet den Radius einer gedachten Kegelschnittfläche am Scheitelpunkt dieser Fläche, d.h. den Abstand des Scheitelpunkts zum nächstgelegenen Brennpunkt. Dabei liegen sowohl der Scheitelpunkt als auch die Brennpunkte der Kegelschnittfläche auf der optischen Achse.

Durch die Koordinaten x und y wird ein Punkt auf der Linsenoberfläche in einem Koordinatensystem mit der optischen Achse entlang der z-Richtung beschrieben. $x^2 + y^2$ bezeichnet somit das Quadrat des Abstands des Punktes zur optischen Achse. Die Funktion z(x, y) bezeichnet den Abstand der Linsenoberfläche von einer lotrecht auf der optischen Achse im Scheitelpunkt der Kegelschnittfläche stehende Ebene beim Koordinatenpaar (x, y). $c_{m,n}$ bezeichnet die Koeffizienten eines Polynoms in x und y. Die Koeffizienten $c_{m,n}$, die konische Konstante k und der Radius R werden iterativ bestimmt. Die z-Achse bezeichnet die primäre optische Achse des Objektivs.

Dabei hat sich gezeigt, dass die beste Position für die Korrektur der durch den schrägen Durchtritt durch das Trennschichtsystem hervorgerufenen Abbildungsfehler im vorderen Teil des Detektionsobjektivs oder vor dem Detektionsobjektiv liegt. Insbesondere kann auch die objektseitig gelegene erste Linse des Detektionsobjektivs mit einer oder zwei solcher Freiformflächen beaufschlagt werden. Das schräg durchtretene Trennschichtsystem erzeugt als führende Bildfehler zunächst rotationssymmetrische Bildfehler, wie Defokussierung und sphärische Aberration. Diese lassen sich jedoch meist bereits durch die üblichen rotationssymmetrischen Linsen im Objektiv oder durch deren Luftabstände korrigieren. Außerdem entstehen auch Achs-Koma und Achs-Astigmatismus sowie Bildfehler höherer Ordnungen, welche jedoch durch die beschriebenen Maßnahmen nicht korrigiert werden können. Diese können jedoch durch eine einzige Freiformlinse praktisch vollständig korrigiert werden, wenn sowohl die Vorder- als auch die Rückseite der Linse von geeignet gewählten Freiformflächen gebildet werden. Die z-Achse ist dabei die primäre optische Achse des Objektivs, d.h. die optische Achse der rotationssymmetrischen Linsen des Objektivs ohne die Freiformelemente, da strenggenommen das Objektiv mit den unsymmetrischen Freiformflächen keine optische Achse mehr besitzt.

Bevorzugt bilden die erste Detektionslinsengruppe und die mindestens eine Schicht des Trennschichtsystems ein optisches System, welches näherungsweise die Bedingung

$$h_1 = f_{FG} \cdot \sin \sigma_0 = n_0 \cdot f'_{FG} \cdot \sin \sigma_0 \qquad (5)$$

erfüllt, Abweichungen von bis zu 10% von dieser Bedingung sind zulässig und tolerierbar. Dabei ist $h_1$ die Einfallshöhe des Öffnungsstrahls am Wellenfrontmanipulator, $\sigma_0$ der Strahlneigungswinkel des Randstrahls gegen die optische Achse, $f_{FG} = -n_0 * f'_{FG}$ die vordere, objektseitige Brennweite der Frontlinsengruppe und $n_0$ der Brechungsindex des Immersionsmediums zwischen Objekt und Frontlinse. Diese Bedingung kann beispielsweise durch eine Frontlinsengruppe erfüllt werden, welche - bis auf die Freiformlinse zur Korrektur des schrägen Strahldurchtritts durch das Trennschichtsystem - allein aus sphärischen Linsen besteht. Besonders einfach und exakt lässt sich die Bedingung jedoch erfüllen, wenn die erste Detektionslinsengruppe eine rotationsasphärische Linse in der Nähe der oben erwähnten Aperturblende umfasst. Die Verwendung mindestens einer rotationssymmetrischen asphärischen Linse ist insbesondere vorteilhaft bei Objektiven mit höchster Apertur bzw. großem Aperturwinkel und unterstützt dann nicht nur die Korrektur des üblichen Öffnungsfehlers, d.h. der sphärischen Aberration, sondern auch die Einhaltung der in Gleichung (4) genannten Sinusbedingung der Frontlinsengruppe. Üblicherweise ist diese Sinusbedingung zwar für ein gesamtes Mikroskopobjektiv erfüllt, da sonst keine scharfe Abbildung in einem ausgedehnten Bildfeld möglich wäre, einzelne Teilgruppen eines Objektivs müssen diese Bedingung jedoch nicht zwangsweise erfüllen.

In einer besonders bevorzugten Ausführung umfasst das Detektionsobjektiv mindestens ein weiteres in den Strahlengang einbringbares oder darin angeordnetes adaptives optisches Detektionskorrekturelement, alternativ oder ergänzend umfasst auch das Beleuchtungsobjektiv mindestens ein weiteres, in den Strahlengang einbringbares oder darin angeordnetes adaptives optisches Beleuchtungskorrekturelement. Diese weiteren adaptiven optischen Abbildungskorrekturelemente sind ebenfalls bevorzugt wieder als Wellenfrontmanipulatoren ausgestaltet. Mit diesen weiteren adaptiven optischen Korrekturelementen können weitere Fehler korrigiert werden, beispielsweise können Aberrationen korrigiert werden, die durch Änderungen der optischen Eigenschaften eines Immersionsmediums oder des Trennschichtsystems entstehen. Solche Korrekturen sind beispielsweise dann erforderlich, wenn ein anderes Immersionsmedium mit einem anderen Brechungsindex oder ein anderes Deckglas verwendet wird. Auch die Adaption auf unterschiedliche Einstellwinkel des Beleuchtungs- bzw. des Detektionsobjektivs kann mit Hilfe eines weiteren adaptiven optischen Korrekturelements erfolgen. Auch solche Aberrationen, die bei der Fokussierung auf andere Objektschnittweiten auftreten, können korrigiert werden. Der Wellenfrontmanipulator kann auch einen kubischen Phasenterm einführen, der in Verbindung mit einem auf die Punktantwort in der Empfängerebene anzuwendenden Entfaltungsalgorithmus eine Erhöhung der Tiefenschärfe erlaubt. Die weiteren adaptiven optischen Detektionskorrekturelemente bzw. Beleuchtungskorrekturelemente können auch für die Innenfokussierung bei gleichzeitiger Korrektur von bei Fokusänderung auftretenden sphärischen Aberrationen oder zur Erhöhung der Tiefenschärfe ausgelegt sein. Mehrere Korrekturfunktionen lassen sich also modular durch Hintereinanderschaltung mehrere, auf die jeweiligen Korrekturfunktionen ausgelegte Wellenfrontmanipulatoren realisieren. Beispielsweise ist es möglich, im Detektionsobjektiv zunächst einen ersten Wellenfrontmanipulator zur Korrektur variierender Dicken des Deckglases, einen zweiten zur Korrektur der bei Fokussierung auf unterschiedliche Objektschnittweiten auftretenden sphärischen Aberrationen und einen dritten zur Korrektur der bei Wechsel des Immersionsmediums auftretenden Fehler in das Mikroskopobjektiv zu integrieren. Jedes der adaptiven optischen Abbildungskorrekturelemente wird zwischen die erste und zweite Linsengruppe des jeweiligen Objektivs, d.h. insbesondere des Beleuchtungs- und/oder des Detektionsobjektivs eingebracht. Da das Objektiv so ausgelegt ist, dass in diesem Bereich zwischen der ersten und der zweiten Linsengruppe, in welchen die Manipulatoren eingesetzt werden, ein paralleler Strahlengang vorliegt, können Wellenfrontmanipulatoren zu demselben Objektiv beliebig hinzugefügt oder entfernt werden, ohne dass das Mikroskopobjektiv seine näherungsweise beugungsbegrenzt ausgelegten Abbildungseigenschaften verliert, bzw. um diese auch bei geänderten Bedingungen zu erhalten.

Auch die Bewegungsrichtungen der verschiedenen Wellenfrontmanipulatoren können unterschiedlich sein. Werden beispielsweise zwei Wellenfrontmanipulatoren im gleichen Objektiv verwendet, so kann die laterale Beweglichkeit des einen Wellenfrontmanipulators beispielsweise in x-Richtung und die laterale Beweglichkeit des anderen Wellenfrontmanipulators beispielsweise in der y-Richtung liegen, wobei die lateralen Richtungen der Bewegung nicht unbedingt senkrecht aufeinander stehen müssen. Alternativ können auch Wellenfrontmanipulatoren verwendet werden, bei denen die Verschiebung einer Rotation entspricht, bei der die beiden Freiformflächen eines Wellenfrontmanipulators um eine zur primären optischen Achse senkrechte Drehachse gegenläufig zueinander rotiert werden. Dabei schneidet die Drehachse die primäre optische Achse. Schließlich können auch solche Wellenfronmanipulatoren, die mit einer Rotation arbeiten, mit solchen, die mit einer reinen Lateralverschiebung arbeiten, kombiniert werden.

Die Erfindung lässt sich bei Mikroskopobjektiven für die Lichtblattmikroskopie, insbesondere bei Detektionsobjektiv und Beleuchtungsobjektiv gleichermaßen realisieren, so dass die Lage des Lichtblattes synchron mit der jeweils anfokussierten Probenebene zusammenfallen kann. Im Beleuchtungsobjektiv wird die Aufgabe jedoch dadurch erheblich vereinfacht, dass die numerische Apertur hier typischerweise nur im Bereich von NA = 0,5 liegt und dass die Anforderungen an die Wellenfrontgüte in der Beleuchtungsoptik gegenüber der Abbildungsoptik typischerweise herabgesetzt sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

## Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:

Fig.1      den grundsätzlichen Aufbau einer Anordnung zur Lichtblattmikroskopie,
Fig.2      eine erste Ausführung eines Detektionsobjektivs in der Gesamtansicht,
Fig.3      den Strahlverlauf im Bereich der Frontlinse des Detektionsobjektivs,
Fig.4a)-c) Darstellungen des Wellenfrontfehlers für die erste Ausführung,
Fig.5      eine weitere Ausführung eines Detektionsobjektivs in der Gesamtansicht, und
Fig.6      die Darstellung des Wellenfrontfehlers für die weitere Ausführung.

## Ausführliche Beschreibung der Zeichnungen

Die im Folgenden erläuterten Beispiele beziehen sich explizit zwar auf ein Detektionsobjektiv, lassen sich jedoch ohne weiteres auch auf ein Beleuchtungsobjektiv oder ein sonstiges Mikroskopobjektiv übertragen.

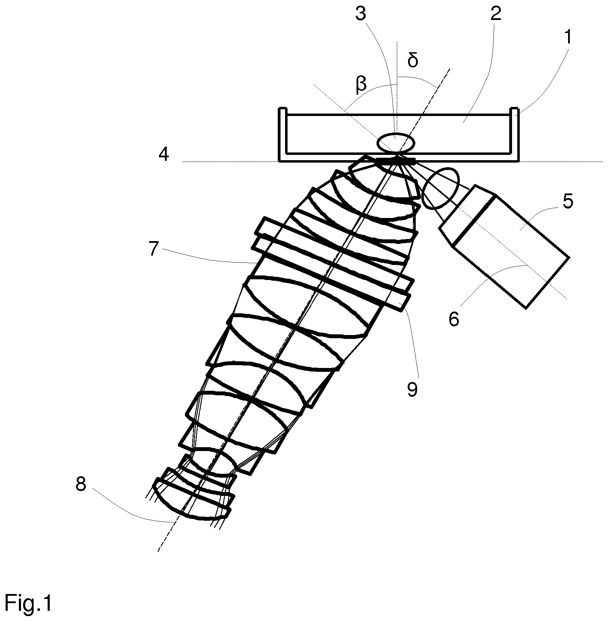

In Figur 1 ist zunächst der grundsätzliche Aufbau einer Anordnung zur Lichtblattmikroskopie gezeigt. Diese Anordnung umfasst ein Probengefäß 1 zur Aufnahme einer in einem Medium 2 befindlichen Probe 3, wobei das Probengefäß 1 hinsichtlich einer ebenen Bezugsfläche 4 ausgerichtet ist. Die Anordnung umfasst außerdem eine Beleuchtungsoptik mit einem Beleuchtungsobjektiv 5 zur Beleuchtung der Probe 3 über einen Beleuchtungsstrahlengang mit einem Lichtblatt. Die optische Achse - bei der Verwendung asphärischer oder frei geformter optischer Elemente die primäre optische Achse - 6 des Beleuchtungsobjektivs 5 und das Lichtblatt liegen in einer Ebene, die mit der Normalen der Bezugsfläche 4 einen von Null verschiedenen Beleuchtungswinkel $\beta$ einschließt. Die Anordnung umfasst außerdem eine Detektionsoptik mit einem Detektionsobjektiv 7 in einem Detektionsstrahlengang, dessen optische Achse 8 mit der Normalen der Bezugsfläche ebenfalls einen von Null verschiedenen Detektionswinkel $\delta$ einschließt. Die Anordnung umfasst außerdem ein Trennschichtsystem mit mindestens einer Schicht aus einem vorgegebenen Material mit vorgegebener Dicke, welche das Medium 2 von dem Beleuchtungsobjektiv 5 und dem Detektionsobjektiv 7 trennt. Dabei ist das Trennschichtsystem mit einer parallel zur Bezugsfläche 4 ausgerichteten Grundfläche zumindest in dem für das Beleuchtungsobjektiv 5 und das Detektionsobjektiv 7 für Beleuchtung bzw. Detektion zugänglichen Bereich mit dem Medium 2 in Kontakt stehend ausgebildet.

Im vorliegenden Fall ist das Probengefäß als Petrischale ausgebildet, welche nach oben offen ist und mit dem Medium 2 befüllt ist. Um eine Kontaminierung zu verhindern, können das Beleuchtungsobjektiv 5 und das Detektionsobjektiv 7 entweder oberhalb des Probengefäßes 1 angeordnet sein - in diesem Fall bildet das Trennschichtsystem nur die Luftschicht zwischen der Oberfläche des Mediums 2 und den Objektiven, sofern kein Deckglas verwendet wird - oder, wie in Figur 1 gezeigt, unterhalb des Probengefäßes 1. In diesem Fall wird das Trennschichtsystem zum einen aus der Schicht zwischen Probengefäß und Objektiv gebildet, zum anderen aber auch durch den transparenten Boden des Probengefäßes 1, welcher aus einem Material mit einem von 1,0 verschiedenen Brechungsindex gefertigt ist. Die Schicht zwischen Probengefäß 1 und Objektiv kann beispielsweise durch ein Immersionsmedium gebildet werden.

Da Detektionsobjektiv 7 und Beleuchtungsobjektiv 5 in Bezug auf die Bezugsfläche 4 und insbesondere auf den Boden des Probengefäßes 1 schräggestellt sind, treten starke Aberrationen auf, wenn Licht vom Beleuchtungsobjektiv 5, hinter welchem sich eine nicht gezeigte Lichtquelle befindet, durch das Trennschichtsystem auf die Probe 3 gelenkt wird, und von der Probe 3 abgestrahltes - beispielsweise gestreutes, reflektiertes, fluoreszenzangeregtes oder allgemein emittiertes Licht - in Richtung des Detektionsobjektivs 7 durch das Trennschichtsystem ebenfalls schräg hindurchtritt.

Um diese Aberrationen und solche, die durch variierende Anstellwinkel des Detektionsobjektivs, d.h. variierende Detektionswinkel und/oder solche Aberrationen, die durch eine variierende Dicke der mindestens einen Schicht des Trennschichtsystems - hier des Probengefäßbodens - entstehen, zu korrigieren bzw. zu beseitigen, umfasst das Detektionsobjektiv 7 ein im Strahlengang angeordnetes oder in diesem einbringbares erstes adaptives optisches Detektionskorrekturelement. Analog kann auch das Beleuchtungsobjektiv 5 ein solches erstes adaptives optisches Beleuchtungskorrekturelement umfassen, das Beleuchtungsobjektiv 5 wurde hier jedoch nur grundlegend skizziert, da sich alle Ausführungen, die sich auf das Detektionsobjektiv 7 beziehen, in analoger Weise auch auf das Beleuchtungsobjektiv übertragen lassen.

Das erste adaptive optische Detektionskorrekturelement ist hier als erster Wellenfrontmanipulator 9 ausgebildet. Mit dem Wellenfrontmanipulator 9 sind Aberrationen, die aufgrund des schrägen Durchtritts von zu detektierenden Licht durch Grenzflächen des Trennschichtsystems entstehen, in Abhängigkeit vom Detektionswinkel und / oder in Abhängigkeit von der Dicke von der mindestens einen Schicht des Trennschichtsystems verringerbar. Anders ausgedrückt, sind also Aberrationen, die entstehen, wenn sich die Dicke der mindestens einen Schicht des Trennschichtsystems und / oder sich der Detektionswinkel, d.h. der Anstellwinkel des Detektionsobjektivs 7 ändert, korrigier- bzw. verringerbar, jeweils innerhalb vorgegebener Bereiche für den Anstellwinkel bzw. die Dicke. Der Wellenfrontmanipulator 9 korrigiert also durch variierende Schichtdicken und / oder durch variierende Anstellwinkel entstehende Aberrationen innerhalb gewisser Bereiche, deren Grenzen von der tatsächlichen Ausgestaltung des jeweiligen Manipulators abhängt.

Die Schicht zwischen Boden und Detektionsobjektiv 7 kann beispielsweise Luft sein. Aufgrund der großen Brechzahlsprünge zwischen den Medien sind die zu korrigierenden rotationsunsymmetrischen Fehler - verglichen mit der Verwendung von Medien mit einander ähnlichen Brechzahlen - relativ groß, die Realisierung von numerischen Aperturen zwischen 0,8 und 1,0 wird in diesem Fall technisch sehr aufwendig. Zwischen dem Boden der Petrischale und den Objektiven befindet sich daher bevorzugt ein Immersionsmedium, beispielsweise Wasser. Ist das Medium 2 von dem Immersionsmedium durch den Boden oder ein entsprechendes Deckglas bei Beobachtung von oben getrennt, so können auch andere Immersionsmedien verwendet werden, beispielsweise solche, die für biologische Proben eine lebensfeindliche Umgebung bedeuten. Wenn man für das Medium 2, das Deckglas bzw. den Gefäßboden und das Immersionsmedium zwischen Deckglas und Objektiv Materialien mit ähnlichen Brechzahlen wählt, lassen sich die Korrekturen auch für große numerische Aperturen einfacher mit Freiformflächen realisieren.

Das Beleuchtungsobjektiv 5 ist hier nur schematisch angedeutet, es umfasst jedoch in der Regel ebenfalls eine Vielzahl von Linsen, insbesondere kann es auch ein erstes adaptives optisches Beleuchtungskorrekturelement umfassen. Im gezeigten Beispiel beträgt der Winkel der primären optischen Achse 8 des Detektionsstrahlengangs zur Normalen der Bezugsfläche 4 $\delta = 32°$, der Öffnungswinkel bei einer numerischen Apertur von 1,0 beträgt im Wasser $\pm 48,55°$. Der Winkel des Beleuchtungsstrahlengangs zur Normalen der Begrenzungsfläche liegt bei $\beta = 63°$ bei einem Öffnungswinkel von typisch 22° bei einer numerischen Apertur von NA = 0,5. Die Dicke des Gefäßbodens des Probengefäßes 1 liegt typischerweise in einem Bereich von 0,17 mm bis 0,5 mm, meist bis 0,19 mm, kann jedoch davon abweichen.

In dem in Fig.1 gezeigten Beispiel umfasst das Detektionsobjektiv 7 genau ein adaptives optisches Detektionskorrekturelement, welches als Wellenfrontmanipulator 9 ausgestaltet ist. Ergänzend kann auch eine - hier nicht gezeigte - Detektionskorrekturlinse eingesetzt werden, die den Hauptfehler für eine bestimmte Dicke der mindestens einen Schicht des Trennschichtsystems, z.B. des Gefäßbodens, und einen bestimmten Detektionswinkel korrigiert, so dass der Wellenfrontmodulator 9 nur die Abweichungen davon korrigiert. Das Prinzip eines solchen Wellenfrontmanipulators 9 ist beispielsweise in der DE 10 2012 101 262 B3 beschrieben, auf deren Offenbarung hier nochmals explizit verwiesen wird und die hier vollständig mit einbezogen wird.

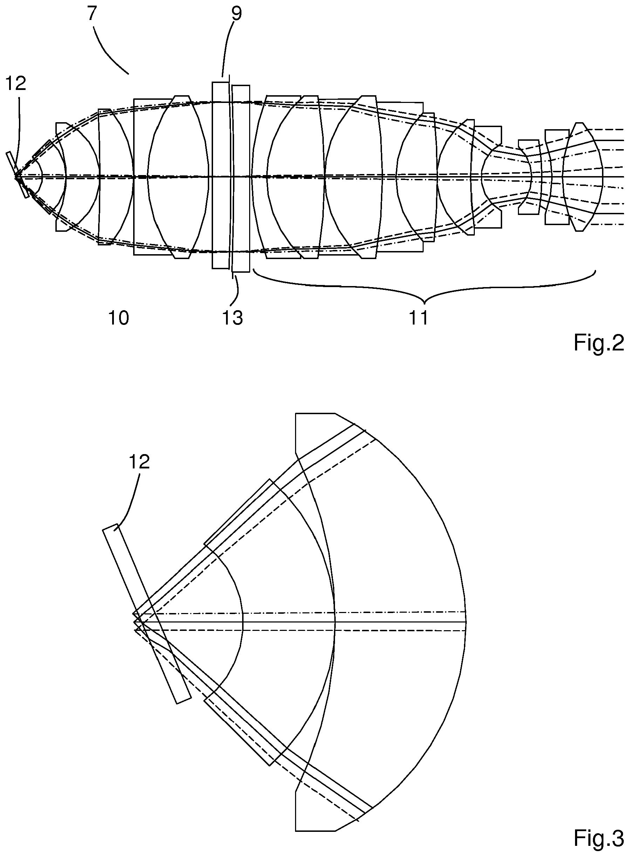

Anhand der Fig.2 und 3 wird eine erste Ausführung eines Detektionsobjektivs 7, welches Teil der Anordnung zur Lichtblattmikroskopie ist, näher beschrieben. Analoge Überlegungen und Einstellungen lassen sich auch für das Beleuchtungsobjektiv 5 machen. Das in Fig.2 gezeigte Detektionsobjektiv 7 umfasst ein erstes adaptives optisches Detektionskorrekturelement im Strahlengang, welches als Wellenfrontmanipulator 9 ausgestaltet ist. Fig.3 zeigt einen entsprechenden Ausschnitt im Frontlinsenbereich. Die unterschiedlichen Linienformen entsprechen Strahlbündeln, die von verschiedenen Objektpunkten ausgehen. Das Detektionsobjektiv 7 hat eine numerische Apertur von 1,0, die gesamte Korrektur der Störeinflüsse eines unter 32° durchlaufenden Deckglases für Deckglasdicken zwischen 0,15 mm und 0,19 mm wird durch den einzigen Wellenfrontmanipulator 9 korrigiert, welcher in der Nähe der Pupille des Detektionsobjektivs 7 angeordnet ist, d.h. in einer Ebene, in welcher der Strahlengang kollimiert ist. Zusammen mit einem entsprechenden Tubuslinsensystem kann eine ca. 39-fache Vergrößerung erreicht werden. Das Detektionsobjektiv 7 ist auf Wasserimmersion ausgelegt, d.h. anstelle eines Trennschichtsystems aus Deckglas/Gefäßboden und Luft wird hier ein Trennschichtsystem aus Deckglas/Gefäßboden und Wasser verwendet. Das in Fig.2 im meridionalen Schnitt gezeigte Detektionsobjektiv 7 umfasst genau einen Wellenfrontmanipulator 9. Dieser wiederum umfasst zwei transversal zueinander bewegliche Freiformelemente, wobei das erste einen lateralen Verstellweg im Bereich von 139 μm bis 177 μm, entsprechend Deckglasdicken von 0,15 mm bis 0,19 mm realisiert. Das zweite Freiformelement realisiert entsprechend entgegengesetzt den gleichgroßen Stellweg im Bereich von -139 μm bei einer Deckglasdicke von 0,15 mm bis - 177 μm bei einer Deckglasdicke von 0,19 mm. Bei der mittleren Deckglasdicke von 0,17 mm befinden sich die Freiformflächen relativ zueinander bei diesem Ausführungsbeispiel somit nicht in der neutralen Stellung, sondern sind zur Kompensation der mittleren Deckglasdicke bereits um 158 μm respektive -158 μm Stellweg aus der Nulllage verschoben.

Mit diesem Beispielsystem ist es möglich, die bei Deckglasdicken zwischen ca. 0,15 mm und 0,19 mm bei einem festen Winkel δ zwischen primärer Objektivachse 8 und Normaler der Bezugsfläche 4 von 32° auftretenden Störeinflüsse praktisch vollständig zu kompensieren, so dass eine im wesentlichen beugungsbegrenzte Abbildung entsteht. Selbstverständlich könnte der Wellenfrontmanipulator 9 auch mit einem größeren Verstellbereich genutzt werden, jedoch verhält sich dann der Stellweg nicht mehr in guter Näherung linear zur Deckglasdicke, und die residualen Wellenfrontfehler bleiben deutlich größer.

Das Objektiv weist ein objektseitiges Bildfeld von 400 μm Durchmesser auf und besitzt beispielsweise eine konventionelle Innenfokussierung, die den objektseitigen Fokuspunkt um ± 50 μm relativ zur mittleren Fokuslage verschieben und die dabei entstehenden sphärischen Aberrationen kompensieren kann. Die Innenfokussierung besteht in der Änderung des Luftraums hinter der Frontlinse des Objektivs, also durch Verschieben des restlichen Objektivs relativ zur Frontlinse, in einem Bereich von 114,5 μm bei einer Objektschnittweite von 0,15 mm vor dem Deckglas, bis zu 20 μm bei einer Objektschnittweite von 0,25 mm vor dem Deckglas. Der Wellenfrontmanipulator 9 befindet sich zwischen einer ersten Linsengruppe 10 und einer zweiten Detektionslinsengruppe 11. Außerdem gezeigt ist die Stellung relativ zum Boden des Probengefäßes, dem Gefäßboden 12. Zwischen den beiden Freiformelementen des Wellenfrontmanipulators 9 ist außerdem eine Aperturblende13 angeordnet, welche von der ersten Detektionslinsengruppe 10 in den Objektraum nach Unendlich abgebildet wird, so dass objektseitig ein näherungsweise telezentrischer Strahlengang besteht.

In Fig.3 ist die Frontpartie des Detektionsobjektivs 7 für eine mittlere Objektschnittweite von 0,2 mm des mittleren Feldpunktes von der Frontlinse des Objektivs vergrößert dargestellt. Der zugehörige Luftabstand zwischen erster und zweiter Linse beträgt hier 55,2 μm.

Bei dem Detektionsobjektiv 7 ist die Abbildungsgüte über den gesamten Defokussierungsbereich hinweg beugungsbegrenzt. Es weist - bis auf den Wellenfrontmanipulator 9 - ausschließlich sphärische Linsen auf, deren Oberflächen durch die übliche Scheitelpunktform der Kugelgleichung

$$z = \frac{(x^2 + y^2)/R}{1 + \sqrt{1 - (1+k) \cdot \frac{(x^2 + y^2)}{R^2}}} \qquad (6)$$

beschrieben werden können. Die z-Achse entspricht der primären optischen Achse des Detektionsobjektivs 7, die x-Achse steht zur Blattebene in Fig.2 und den übrigen Figuren senkrecht. In der folgenden Tabelle 1 sind die optischen Konstruktionsdaten für das in Fig.2 und Fig.3 gezeigte Detektionsobjektiv 7 dargestellt. Alle optischen Elemente sind als brechende Glaselemente ausgeführt.

Tabelle 1: Objektivdaten zum ersten Ausführungsbeispiel (Fig.2, Fig.3)

| Nr. | Radius (y) | Dicke/ Abstand | Glastyp/Medium | Halber Durchmesser | Non-Centered Data |
|---|---|---|---|---|---|
| Objekt | ∞ | 0,2000 | Wasser | | |
| 1 | ∞ | 0,0000 | Wasser | 2,02 | Basic Decenter |
| 2 | ∞ | 0,1500 | K5 | 2,02 | |
| 3 | ∞ | 0,0000 | Wasser | 2,35 | |
| 4 | ∞ | 1,8695 | Wasser | 0,61 | Basic Decenter |
| 5 | -2,6003 | 2,1353 | NLASF31 | 1,86 | |
| 6 | -4,6951 | 0,0552 | | 3,43 | |

(fortgesetzt)

| Nr. | Radius (y) | Dicke/ Abstand | Glastyp / Medium | Halber Durchmesser | Non-Centered Data |
|---|---|---|---|---|---|
| 7 | -10,1283 | 2,9429 | SFPL51 | 4,16 | |
| 8 | -5,8423 | 0,0200 | | 5,01 | |
| 9 | -168,9298 | 3,3850 | SFPL53 | 6,60 | |
| 10 | -10,9746 | 0,0200 | | 6,99 | |
| 11 | -991,4694 | 1,0000 | SIO2 | 7,56 | |
| 12 | 13,9348 | 5,8585 | SFPL53 | 8,12 | |
| 13 | -16,4609 | 0,1000 | | 8,30 | |
| 14 | ∞ | 0,1000 | | 8,30 | |
| 15 | ∞ | 0,0000 | | 8,47 | Basic Decenter |
| 16 | ∞ | 1,5000 | SLAH79 | 8,47 | |
| 17 | ∞ | 0,0000 | | 8,47 | |
| 18 | ∞ | 0,0000 | | 8,27 | Basic Decenter |
| Blende | ∞ | 0,2000 | | 8,27 | |
| 20 | ∞ | 0,0000 | | 8,45 | Basic Decenter |
| 21 | ∞ | 1,5000 | SLAH79 | 8,45 | |
| 22 | ∞ | 0,0000 | | 8,48 | |
| 23 | ∞ | 0,0000 | | 8,31 | Basic Decenter |
| 24 | ∞ | 0,1000 | | 8,31 | |
| 25 | 45,4816 | 1,5000 | NKZFS11 | 8,35 | |
| 26 | 11,4710 | 5,7460 | SFPL53 | 8,16 | |
| 27 | -35,4596 | 0,0200 | | 8,29 | |
| 28 | 11,3109 | 5,7621 | SFPL53 | 8,43 | |
| 29 | -45,2192 | 1,4000 | NKZFS11 | 8,07 | |
| 30 | 8,6183 | 4,6293 | SFPL53 | 6,84 | |
| 31 | -148,3167 | 0,0200 | | 6,73 | |
| 32 | 7,4611 | 3,6257 | SNBK53 | 6,17 | |
| 33 | 43,8435 | 1,1000 | STIL1 | 5,73 | |
| 34 | 3,8005 | 5,9878 | | 3,55 | |
| 35 | -4,7035 | 0,8000 | NKZFS4 | 3,29 | |
| 36 | -15,8946 | 1,2733 | | 3,77 | |
| 37 | -7,4287 | 1,0000 | NKZFS4 | 3,95 | |
| 38 | 10,6637 | 4,8693 | NSK2 | 5,48 | |
| 39 | -7,6635 | 0,0200 | | 5,78 | |
| 40 | ∞ | 126,5000 | | 5,98 | |
| 41 | 189,4170 | 10,9000 | NBALF4 | 15,36 | |
| 42 | -189,4170 | 60,0000 | | 15,52 | |
| 43 | ∞ | 80,0000 | NBK7 | 14,19 | |
| 44 | ∞ | 48,2000 | | 13,04 | |

(fortgesetzt)

| Nr. | Radius (y) | Dicke/ Abstand | Glastyp/Medium | Halber Durchmesser | Non-Centered Data |
|-----|-----------|----------------|----------------|---------------------|--------------------|
| Bild | ∞ | 0,0000 | | 11,99 | |

Der y-Radius in Tabelle 1 ist der Scheitelradius in der y-z-Ebene. Der Halbe Durchmesser bezeichnet den freien Halbdurchmesser, d.h. den halben erforderlichen Durchmesser der Fläche, durch welche alle Strahlenbündel gerade unvignettiert durch das optische System hindurchtreten können, und ist in mm angegeben.

Die Flächen werden von der Objektseite her durchnummeriert, die Nummern sind in der linken Spalte angegeben. Die Probe befindet sich in Wasser bei einer Temperatur von ca. 23 °C oder in einer physiologischen Kochsalzlösung. Ebenso befindet sich die Kochsalzlösung bzw. das Wasser zwischen Gefäßboden 12 und dem Detektionsobjektiv 7. Die objektseitige Fläche des Gefäßbodens 12 hat die Flächennummer 2. Zwischen der Fläche 18 und der Fläche 20 befindet sich die Aperturblende 13, die zwischen den beiden Teilen des Wellenfrontmanipulators 9 angeordnet ist, wie Fig. 2 zu entnehmen ist. Die Freiformflächen des Wellenfrontmanipulators entsprechen genau diesen Flächen 17 und 21. Ist als y-Radius ein Wert von "Unendlich" angegeben, so handelt es sich bei den Flächen jeweils um eine Planfläche, es sei denn, die betreffenden Flächen sind Freiformflächen. Die Dicke ist in mm angegeben, ebenso der y-Radius. Bis auf die Freiformflächen 17 und 21 sind alle Flächen sphärisch oder plan. Die Angaben in der letzten Spalten beziehen sich auf den Dezentrierungstyp. "Basic decenter" bedeutet, dass das für die Bestimmung von Koeffizienten etc. herangezogene Koordinatensystem für die aktuelle und alle nachfolgenden Flächen um die Dezentrierungsdaten verkippt ist. Als Dezentrierung bei den Flächen 1 und 4 liegt hier nur eine Verkippung des Deckglases vor. Für die Fläche 1 ist der Wert ADE daher 32°, für die Fläche 4 beträgt er -32°, für diese Fläche beträgt außerdem der Wert für die in Tabelle 1 angegebene Grundstellung YDE = -0,07463 als Ausgleich für den durch das schräge Deckglas hervorgerufenen Parallelversatz. Für die anderen Stellungen, welche in der folgenden Tabelle 2 ab Zeile 2 angegeben sind, beträgt der Wert jeweils -0,04861, - 0,02261, -0,03014, -0,00416, 0,02180, -0,08492, -0,05890 und -0,03288. Alle anderen Werte BDE, CDE, XDE, ZDE sind gleich Null, für Fläche 1 ist auch der Wert YDE = 0. Die Angaben "XDE ... CDE" beziehen sich auf die Dezentrierung des Koordinatensystems und sind so zu verstehen, dass das lokale Koordinatensystem, in welchem die entsprechende Fläche durch ihre Pfeilhöhenformel - Gleichung (1) oder (4) - beschrieben ist, gegenüber dem um den Wert in der Spalte "Dicke/Abstand" in Z-Richtung verschobenen Koordinatensystem der vorangehenden Fläche um einen Winkel ADE um die lokale x-Achse gedreht ist, um einen Winkel BDE um die lokale y-Achse und um einen Winkel CDE um die lokale z-Achse. Ein positives Vorzeichen bedeutet dabei eine Drehung gegen den Urzeigersinn, ein negatives Vorzeichen eine Drehung im Uhrzeigersinn um die jeweilige lokale Achse.

Die in Tabelle 1 in den Zeilen "Objekt", 2 und 6 angegebenen Werte gelten dabei nur für die Grundkonfiguration bei einer Deckglasdicke von 0,15 mm und einem Objektabstand von 0,20 mm. Entsprechend der folgenden Tabelle 2 kann die Deckglasdicke bzw. Gefäßbodendicke Werte zwischen 0,15 mm und 0,19 mm und der Objektabstand Werte zwischen 0,15 mm und 0,25 mm annehmen, der in Zeile 6 von Tabelle 1 angegebene Fokussierluftraum liegt dann in einem Bereich zwischen 0,02 mm und 0,115 mm.

Die in Tabelle 2 angegebenen Aktorstellwege der beiden Freiformelemente entsprechen den Dezentrierungsdaten der Flächen 15 und 18 (Aktorstellweg 1), bzw. 20 und 23 (Aktorstellweg 2) und beschreiben die seitlichen Auslenkungen der beiden Freiformelemente des Wellenfrontmanipulators in den jeweiligen Konfigurationsstellungen für verschiedene Objektabstände und Deckglasdicken, wie sie oben bereits beschrieben wurden.

Tabelle 2: Aktorstellwege der Freiformelemente, erstes Ausführungsbeispiel

| Objektabstand | Deckglasdicke | Fokussierluftraum | Aktorstellweg 1 | Aktorstellweg 2 |
|---------------|---------------|--------------------|------------------|------------------|
| 0,20 | 0,15 | 0,0552 | 0,1394 | -0,1394 |
| 0,20 | 0,17 | 0,0552 | 0,1582 | -0,1582 |
| 0,20 | 0,19 | 0,0552 | 0,1770 | -0,1770 |
| 0,25 | 0,15 | 0,0200 | -0,1394 | -0,1394 |
| 0,25 | 0,17 | 0,0200 | 0,1582 | -0,1582 |
| 0,25 | 0,19 | 0,0200 | 0,1770 | -0,1770 |
| 0,15 | 0,15 | 0,1145 | 0,1394 | -0,1394 |
| 0,15 | 0,17 | 0,1145 | 0,1582 | -0,1582 |
| 0,15 | 0,19 | 0,1145 | 0,1770 | -0,1770 |

Der Wellenfrontmanipulator 9 umfasst genau zwei Freiformflächen, deren Form durch eine reine Polynomentwicklung gemäß Formel (1), d.h. durch

$$z = \sum_{m,n=1}^{\infty} C_{m,n} x^m y^n$$

beschrieben wird. Hierbei bezeichnen x, y und z die drei kartesischen Koordinaten eines auf der Fläche liegenden Punktes im lokalen, flächenbezogenen Koordinatensystem. Die Koeffizienten der Polynomentwicklung sind jeweils in den entsprechenden Zeilen bei der zugehörigen Flächennummer angegeben, wobei die Polynomkoeffizienten mit den Potenzen der zugehörigen Entwicklungsterme gekennzeichnet sind. Die Polynomkoeffizienten der Freiformflächen des Wellenfrontmanipulators 9 sind durch eine Optimierungsrechnung bestimmt und in Tabelle 3 wiedergeben.

Tabelle 3: Polynomkoeffizienten der Freiformfläche des Wellenfrontmanipulators (Fig. 2)

| X2: | -3,2154E-03 | Y2: | -73916E-04 | X2Y: | -1,0149E-04 |
|---|---|---|---|---|---|
| Y3: | 5,6987E-05 | X3: | -1,9215E-05 | X2Y2: | -2,2498E-05 |
| Y4: | -1,4522E-05 | X4Y: | 2,1058E-06 | X2Y3: | 2,4235E-06 |
| Y5: | 1,1379E-06 | X6: | 1,8211 E-07 | X4Y2: | -7,2456E-08 |
| X2Y4: | -9,9696E-08 | Y6: | -4,7971 E-08 | X6Y: | 9,8290E-09 |
| X4Y3: | 9,9328E-09 | X2Y5: | 8,1740E-09 | Y7: | 2,3963E-09 |
| X8: | -5,2562E-10 | X6Y2: | -2,6458E-10 | X4Y4: | -5,7468E-10 |
| X2Y6: | -4,3483E-10 | Y8: | -7,1325E-11 | | |

Dabei bezeichnete die Schreibweise "X2Y3" den Koeffizienten $C_{2,3}$, das heißt m=2, n=3, etc. "Y" würde m=0 und n=1 bezeichnen.

Die Brechzahlen der verwendeten optischen Medien sind für einige ausgwählte Wellenlängen in Tabelle 4 angegeben.

Tabelle 4: Im Beispiel gemäß Figur 2 verwendete Glassorten

| Glassorte/ Medium | $\lambda$[nm] | 656,00 | 587,00 | 546,00 | 486,00 | 435,00 |
|---|---|---|---|---|---|---|
| Wasser | | 1,3309 | 1,3328 | 1,3342 | 1,3369 | 1,3400 |
| K5 | | 1,5198 | 1,5225 | 1,5246 | 1,5286 | 1,5335 |
| SFPL53 | | 1,4373 | 1,4388 | 1,4399 | 1,4420 | 1,4445 |
| NKZFS11 | | 1,6332 | 1,6378 | 1,6413 | 1,6483 | 1,6569 |
| SNBH53 | | 1,7313 | 1,7381 | 1,7434 | 1,7542 | 1,7680 |
| NKZFS4 | | 1,6092 | 1,6134 | 1,6166 | 1,6230 | 1,6309 |
| NBALF4 | | 1,5763 | 1,5796 | 1,5821 | 1,5871 | 1,5931 |
| NBK7 | | 1,5143 | 1,5168 | 1,5187 | 1,5224 | 1,5268 |
| NLASF31 | | 1,8743 | 1,8807 | 1,8858 | 1,8957 | 1,9082 |
| SFPL51 | | 1,4951 | 1,4970 | 1,4985 | 1,5012 | 1,5046 |
| SIO2 | | 1,4564 | 1,4585 | 1,4601 | 1,4631 | 1,4667 |
| STIL1 | | 1,5446 | 1,5481 | 1,5510 | 1,5566 | 1,5635 |
| NSK2 | | 1,6041 | 1,6074 | 1,6099 | 1,6149 | 1,6208 |
| SLAH79 | | 1,9930 | 2,0034 | 2,0117 | 2,0285 | 2,0501 |

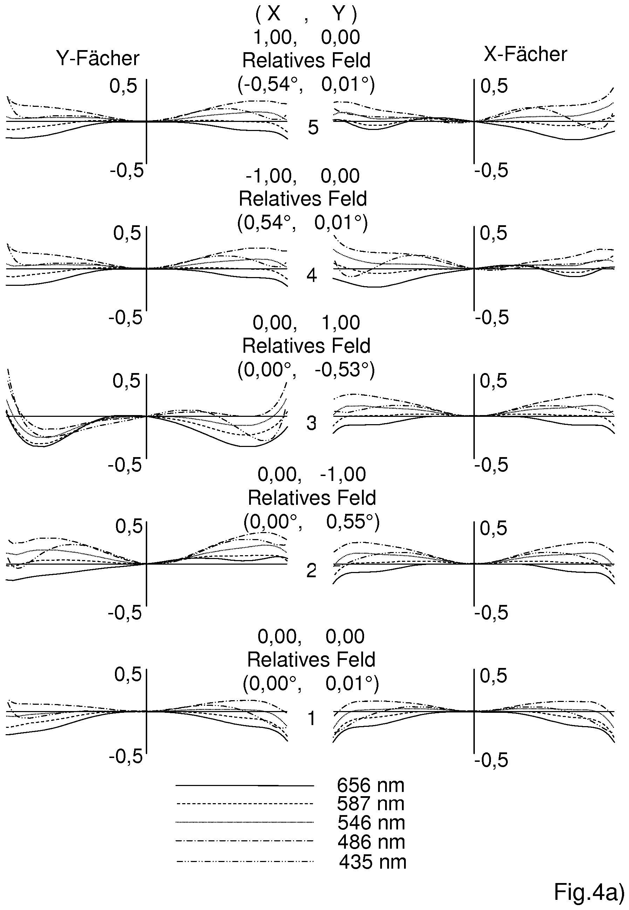

In den Fig. 4a) bis 4c) schließlich ist für dieses erste Ausführungsbeispiel der residuale Wellenfrontfehler, also der Korrekturzustand des Objektivs für einige ausgewählte Kombinationen von Objektlage und Dicke des Gefäßbodens bzw. des Deckglases dargestellt, für Wellenlängen in einem Bereich zwischen 435 nm und 656 nm. Den Darstellungen ist zu entnehmen, dass das Objektiv die Störeinflüsse nahezu vollständig kompensiert und in allen Stellungen eine praktisch beugungsbegrenzte Abbildung liefert. Die Abbildungsgüte ist über den gesamten Bereich der Dicken des Gefäßbodens und über den gesamten Defokussierungsbereich hinweg beugungsbegrenzt.

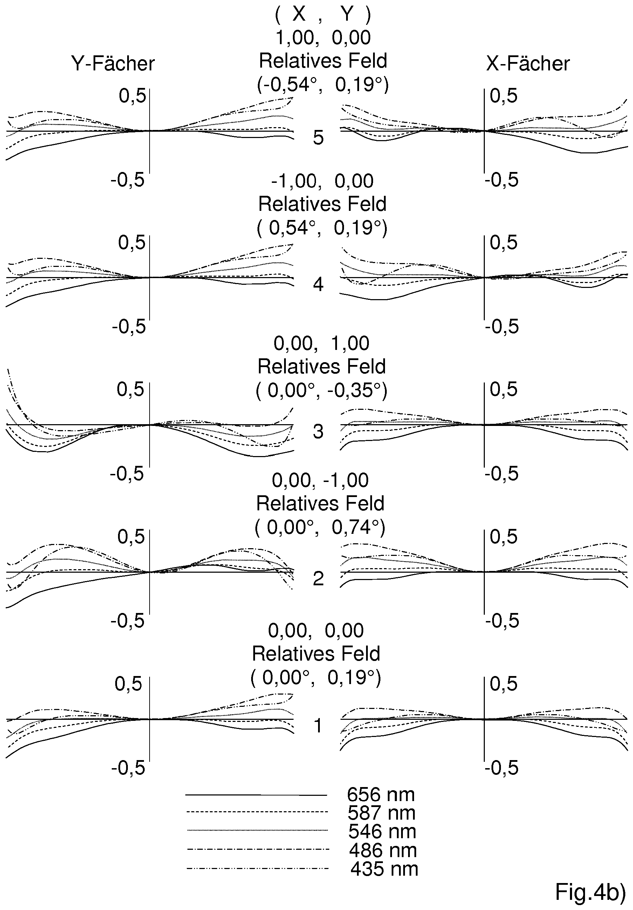

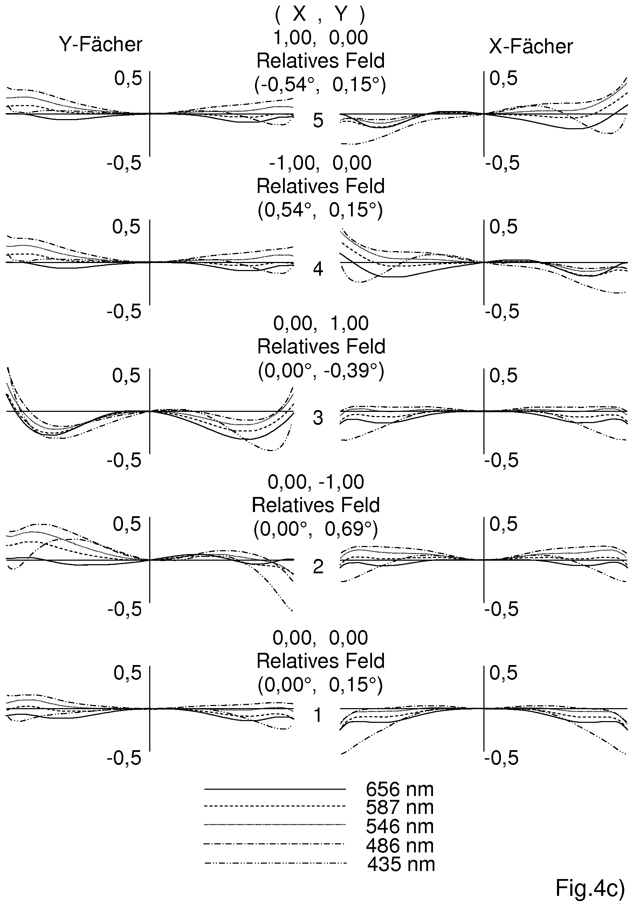

In Fig. 4a) ist der Wellenfrontfehler für einen Objektabstand von 0,20 mm, eine Gefäßbodendicke bzw. Deckglasdicke von 0,15 mm und einen Fokussierluftraum von 0,0552 mm dargestellt, entsprechend der ersten Zeile von Tabelle 2. In Fig. 4b) ist der Wellenfrontfehler für einen Objektabstand von 0,25 mm, eine Gefäßbodendicke bzw. Deckglasdicke von 0,17 mm und einen Fokussierluftraum von 0,02 mm dargestellt, entsprechend der fünften Zeile von Tabelle 2. In Fig. 4c) ist der Wellenfrontfehler für einen Objektabstand von 0,15 mm, eine Gefäßbodendicke bzw. Deckglasdicke von 0,19 mm und einen Fokussierluftraum von 0,1145 mm dargestellt, entsprechend der letzten Zeile von Tabelle 2. Die Bildfehlerkurven sind jeweils für den axialen Feldpunkt, d.h. die Bildmitte, und für die vier Feldpunkte am Rand des Bildfeldkreises in den Schnittpunkten mit den Koordinatenachsen dargestellt. Die vertikale Achse bezeichnet den Wellenfrontfehler, wobei die Skala von -0,5 mm bis 0,5 mm reicht. Die Abbildungen zeigen auf der linken Seite jeweils den residualen Wellenfrontfehler in Abhängigkeit von der y-Koordinate (Y-Fächer) und auf der rechten Seite den residualen Wellenfrontfehler in Abhängigkeit von der x-Koordinate (X-Fächer).

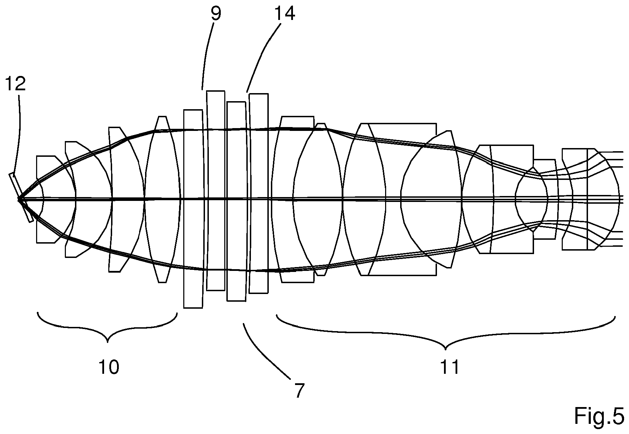

Ein zweites Ausführungsbeispiel ist in Figur 5 dargestellt. Hier handelt es sich um ein Detektionsobjektiv 7 mit zwei integrierten Wellenfrontmanipulatoren 9, 14. Diese beiden Wellenfrontmanipulatoren 9, 14 sind dazu ausgelegt, gleichzeitig einerseits Abbildungsfehler, die durch variierende Dicken des Gefäßbodens 12 und des Detektionswinkels $\delta$, d.h. des Anstellwinkels zum Gefäßboden 12 und andererseits Aberrationen, die durch eine variierende Objektlage im Immersionsmedium hervorgerufen werden und Refokussierung erfordern, zu kompensieren. Der Objektabstand kann um 5 mm um einen mittleren Objektabstand von 0,40 mm variieren, d.h. zwischen 0,35 mm und 0,45 mm. Gleichzeitig kann die Dicke des Gefäßbodens 12 um 0,1 mm um eine mittlere Dicke von 0,17 mm variieren, d.h. zwischen 0,16 mm und 0,18 mm. Auch der Detektionswinkel $\delta$ zwischen der Detektionsachse, d.h. der primären Objektivachse und der Normalen der Bezugsfläche 4, die der Ebene des Gefäßbodens 12 entspricht, kann um 1° um einen mittleren Winkel von 26°, d.h. zwischen 25° und 27° variieren. Alle Variationen können in Kombination miteinander auftreten.

Wie in dem in Figur 2 gezeigten Beispiel weist das in Fig. 5 dargestellte Detektionsobjektiv 7 eine numerische Apertur von 1,0 auf und ist auf Wasserimmersion ausgelegt. Der Abbildungsmaßstab bei den Nominal- bzw. Nennwerten, d.h. den mittleren Werten der o.g. variierbaren Parameter, beträgt inklusive einer - hier nicht gezeigten - Tubuslinsenoptik 40:1. Das Detektionsobjektiv 7 weist ein objektseitiges Bildfeld von 200 $\mu$m Durchmesser auf. Die beiden Wellenfrontmanipulatoren 9 und 14 umfassen je zwei transversal zueinander bewegliche Freiformelemente. Mit diesem Beispielsystem ist es möglich, die bei den verschiedenen Kombinationen aus Objektlage, Deckglas- bzw. Gefäßbodendicke und Anstellwinkel auftretenden Störeinflüsse praktisch vollständig zu kompensieren, so dass eine im Wesentlichen beugungsbegrenzte Abbildung entsteht.

Figur 5 zeigt das Detektionsobjektiv 7 für einen Objektabstand von 0,35 mm bei einer Gefäßbodendicke von 0,16 mm und einem Anstellwinkel von 25°. Die Freiformelemente im ersten Wellenfrontmanipulator 9 sind um $\pm 1,608$ mm und die Freiformelemente im weiteren Wellenfrontmanipulator 14 sind um $\pm 0,982$ mm ausgelenkt. Die drei verschiedenen Strahlverläufe entsprechen Strahlbündeln, die von verschiedenen Objektpunkten ausgehen

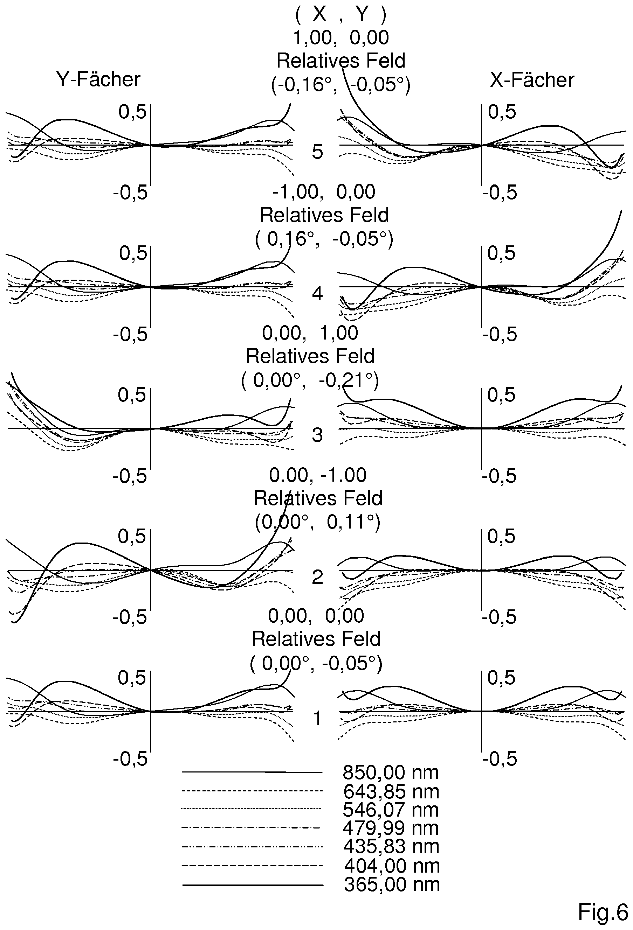

Fig. 6 schließlich zeigt in Analogie zu Fig. 4a)-4c) beispielhaft die zugehörige Korrektionsdarstellung für die in Fig. 5 gezeigte Objektivkonfiguration, d.h. den residualen Wellenfrontfehler. Man erkennt eine im wesentlichen beugungsbegrenzte Korrektion in einem sehr großen Wellenlängenbereich zwischen 365 nm und 850 nm. Für andere Kombinationen von Parametern, wie beispielsweise in den Tabellen 6a bis 6c angegeben, ergeben sich ähnlich gute Korrektionszustände.

Die optischen Konstruktionsdaten für das in Figur 5 gezeigte Detektionsobjektiv 7 sind in Tabelle 5 angegeben. Bei variierender Deckglasdicke ändern sich der entsprechende Wert in Zeile 2 der Tabelle und der in Zeile 6 in Tabelle 5 angegebene Fokussierluftraum, ebenso ist der Objektabstand keine konstante Größe. In den folgenden Tabellen 6a-6c sind verschiedene Objektabstände berücksichtigt.

Tabelle 5: Objektivdaten zum zweiten Ausführungsbeispiel (Fig. 5)

| Nr. | Radius (y) | Dicke/ Abstand | Glastyp/Medium | Halber Durchmesser | Non-Centered Data |
|---|---|---|---|---|---|
| Objekt | ∞ | 0,3500 | Wasser | | |
| 1 | ∞ | 0,0000 | Wasser | 1,58 | Basic Decenter |
| 2 | ∞ | 0,1600 | K5 | 1,58 | |
| 3 | ∞ | 0,0000 | Wasser | 1,86 | |
| 4 | ∞ | 1,2000 | Wasser | 0,80 | Basic Decenter |

(fortgesetzt)

| Nr. | Radius (y) | Dicke/ Abstand | Glastyp / Medium | Halber Durchmesser | Non-Centered Data |
|---|---|---|---|---|---|
| 5 | -4,5119 | 2,9701 | NLASF44 | 1,75 | |
| 6 | -5,1833 | 0,0500 | | 3,48 | |
| 7 | -9,3871 | 3,1929 | SFPL53 | 3,93 | |
| 8 | -6,3663 | 0,0200 | | 5,05 | |
| 9 | -34,0326 | 2,6626 | SFPL53 | 6,08 | |
| 10 | -10,6222 | 0,0200 | | 6,49 | |
| 11 | 28,0140 | 3,0266 | SFPL53 | 7,35 | |
| 12 | -24,0690 | 0,2000 | | 7,43 | |
| 13 | ∞ | 0,0000 | | 9,41 | Basic Decenter |
| 14 | ∞ | 1,4000 | NLASF44 | 9,41 | |
| 15 | ∞ | 0,0000 | | 9,40 | |
| 16 | ∞ | 0,0000 | | 7,41 | Basic Decenter |
| 17 | ∞ | 0,1000 | | 7,41 | |
| 18 | ∞ | 0,0000 | | 9,41 | Basic Decenter |
| 19 | ∞ | 1,4000 | NLASF44 | 9,41 | |
| 20 | ∞ | 0,0000 | | 9,41 | |
| 21 | ∞ | 0,0000 | | 7,41 | Basic Decenter |
| 22 | ∞ | 0,1000 | | 7,41 | |
| 23 | ∞ | 0,0000 | | 8,94 | Basic Decenter |
| 24 | ∞ | 1,4000 | NLASF44 | 8,94 | |
| 25 | ∞ | 0,0000 | | 8,94 | |
| 26 | ∞ | 0,0000 | | 7,41 | Basic Decenter |
| Blende | ∞ | 0,1000 | | 7,40 | |
| 28 | ∞ | 0,0000 | | 8,94 | Basic Decenter |
| 29 | ∞ | 1,4000 | NLASF44 | 8,94 | |
| 30 | ∞ | 0,0000 | | 8,96 | |
| 31 | ∞ | 0,0000 | | 7,44 | Basic Decenter |
| 32 | ∞ | 0,0200 | | 7,44 | |
| 33 | 47,8946 | 1,5000 | NKZFS11 | 7,45 | |
| 34 | 11,4953 | 5,3391 | SFPL53 | 7,30 | |
| 35 | -15,7077 | 0,0200 | | 7,36 | |
| 36 | 15,2591 | 4,3880 | SFPL53 | 6,87 | |
| 37 | -15,5375 | 1,4894 | NKZFS11 | 6,55 | |
| 38 | 7,7658 | 6,4441 | SFPL53 | 5,75 | |
| 39 | -32,7088 | 0,0200 | | 5,69 | |
| 40 | 9,2942 | 4,0670 | SNBH53 | 5,45 | |
| 41 | -22,7060 | 2,7663 | NKZFS2 | 4,81 | |
| 42 | 3,6115 | 3,1566 | | 2,78 | |

(fortgesetzt)

| Nr. | Radius (y) | Dicke/ Abstand | Glastyp/Medium | Halber Durchmesser | Non-Centered Data |
|------|------------|----------------|----------------|--------------------|--------------------|
| 43 | -4,0162 | 0,8000 | NKZFS4 | 2,70 | |
| 44 | -14,3255 | 1,2490 | | 3,10 | |
| 45 | -6,8388 | 1,0000 | NKZFS8 | 3,32 | |
| 46 | 177,9012 | 2,9672 | NLAK8 | 4,08 | |
| 47 | -6,2616 | 0,1503 | | 4,49 | |
| 48 | ∞ | 126,5000 | | 4,56 | |
| 49 | 189,4170 | 10,9000 | NBALF4 | 8,37 | |
| 50 | -189,4170 | 60,0000 | | 8,39 | |
| 51 | ∞ | 80,0000 | NBK7 | 7,07 | |
| 52 | ∞ | 48,2000 | | 5,91 | |
| Bild | ∞ | 0,0000 | | 4,97 | |

Der Kippwinkel des Gefäßbodens 12, der hier zwischen 25° und 27° variiert, wird durch die Dezentrierungsdaten der Flächen 1 und 4 beschrieben. Hier ist für Fläche 1 der Wert ADE = 25°, alle anderen Dezentrierungswerte sind Null. Für Fläche 4 ist der Wert ADE = -25° und, als Ausgleich für den durch das schräge Deckglas hervorgerufenen Parallelversatz, eine Dezentrierung YDE = -0,079265 vor, bei der in Tabelle 5 angegebenen Grundstellung.

Die in den Tabellen 6a-6c angegebenen Aktorstellwege der zwei Wellenfrontmanipulatoren und damit vier Freiformelementen bzw. acht Flächen entsprechen den Dezentrierungsdaten der Flächen 13 und 16 (Aktorstellweg 1), 18 und 21 (Aktorstellweg 2), 23 und 26 (Aktorstellweg 3), bzw. 28 und 31 (Aktorstellweg 4) und beschreiben die seitlichen Auslenkungen der Freiformelemente der Wellenfrontmanipulatoren in den jeweiligen Konfigurationsstellungen für verschiedene Objektabstände und Deckglasdicken. Dabei beträgt die Deckglasdicke bzw. die Dicke des Gefäßbodens jeweils 0,16 mm in Tabelle 6a, 0,17 mm in Tabelle 6b und 0,18 mm in Tabelle 6c. Der Winkel bezeichnet jeweils den Anstellwinkels des Detektionsobjektivs zum Gefäßboden, gemessen zwischen der primären optischen Achse des Objektivs und der Normalen des Gefäßbodens.

Tabelle 6a: Aktorstellwege zweites Ausführungsbeispiel, Deckglasdicke 0,16 mm

| Objektabstand | Winkel | Aktorstellweg | | | |
|---------------|--------|------|------|------|------|
| | | 1 | 2 | 3 | 4 |
| 0,35 | 25° | -1,60811 | 1,60811 | -0,98223 | 0,98223 |
| 0,40 | 25° | -1,60811 | 1,60811 | 0,20103 | -0,20103 |
| 0,45 | 25° | -1,60811 | 1,60811 | 1,38924 | -1,38924 |
| 0,35 | 26° | -1,70905 | 1,70905 | -1,11069 | 1,11069 |
| 0,40 | 26° | -1,70905 | 1,70905 | 0,07332 | -0,07332 |
| 0,45 | 26° | -1,70905 | 1,70905 | 1,25987 | -1,25987 |
| 0,35 | 27° | -1,81311 | 1,81311 | -1,24433 | 1,24433 |
| 0,40 | 27° | -1,81311 | 1,81311 | -0,05925 | 0,05925 |
| 0,45 | 27° | -1,81311 | 1,81311 | 1,12584 | -1,12584 |

Tabelle 6b: Aktorstellwege zweites Ausführungsbeispiel, Deckglasdicke 0,17 mm

| Objektabstand | Winkel | Aktorstellweg | | | |
|---------------|--------|------|------|------|------|
| | | 1 | 2 | 3 | 4 |
| 0,35 | 25° | -1,69493 | 1,69493 | -0,91535 | 0,91535 |

(fortgesetzt)

| Objektabstand | Winkel | Aktorstellweg | | | |
|---|---|---|---|---|---|
| | | 1 | 2 | 3 | 4 |
| 0,40 | 25° | -1,69493 | 1,69493 | 0,26749 | -0,26749 |
| 0,45 | 25° | -1,69493 | 1,69493 | 1,45657 | -1,45657 |
| 0,35 | 26° | -1,79992 | 1,79992 | -1,05037 | 1,05037 |
| 0,40 | 26° | -1,79992 | 1,79992 | 0,13313 | -0,13313 |
| 0,45 | 26° | -1,79992 | 1,79992 | 1,32033 | -1,32033 |
| 0,35 | 27° | -1,90799 | 1,90799 | -1,19053 | 1,19053 |
| 0,40 | 27° | -1,90799 | 1,90799 | -0,00603 | 0,00603 |
| 0,45 | 27° | -1,90799 | 1,90799 | 1,17952 | -1,17952 |

Tabelle 6c: Aktorstellwege zweites Ausführungsbeispiel, Deckglasdicke 0,18 mm

| Objektabstand | Winkel | Aktorstellweg | | | |
|---|---|---|---|---|---|
| | | 1 | 2 | 3 | 4 |
| 0,35 | 25° | -1,77977 | 1,77977 | -0,84579 | 0,84579 |
| 0,40 | 25° | -1,77977 | 1,77977 | 0,33669 | -0,33669 |
| 0,45 | 25° | -1,77977 | 1,77977 | 1,52676 | -1,52676 |
| 0,35 | 26° | -1,88849 | 1,88849 | -0,98694 | 0,98694 |
| 0,40 | 26° | -1,88849 | 1,88849 | 0,19609 | -0,19609 |
| 0,45 | 26° | -1,88849 | 1,88849 | 1,38405 | -1,38405 |
| 0,35 | 27° | -2,00000 | 2,00000 | -1,13291 | 1,13291 |
| 0,40 | 27° | -2,00000 | 2,00000 | 0,05103 | -0,05103 |
| 0,45 | 27° | -2,00000 | 2,00000 | 1,23713 | -1,23713 |

Die Dezentrierungsdaten der Flächen 13, 16, 18 und 21 - die Aktorstellwege 1 und 2 - beschreiben die seitlichen Auslenkungen der beiden Freiformelemente des ersten Wellenfrontmanipulators 9 in den jeweiligen Konfigurationsstellungen, und die Dezentrierungsdaten der Flächen 23, 26, 28 und 31 - die Aktorstellwege 3 und 4 - beschreiben die seitlichen Auslenkungen der beiden Freiformelemente des weiteren Wellenfronmanipulators 14.

Die Polynomkoeffizienten der Freiformflächen des ersten Wellenfronmanipulators 9 sind in Tabelle 7 im oberen Bereich angegeben, die Polynomkoeffizienten der Freiformfläche des zweiten, weiteren Wellenfrontmanipulators 14 in den letzten drei Zeilen der Tabelle 7.

Tabelle 7: Polynomkoeffizienten der Wellenfronmanipulatoren 9, 14 (Fig. 5)

| X2: | 6,7323E-04 | | Y2: | 4,1985E-04 | | X2Y: | 3,1255E-04 |
|---|---|---|---|---|---|---|---|
| Y3: | 9,7271 E-05 | | X4: | 3,3902E-05 | | X2Y2: | 1,8174E-06 |
| Y4: | 1,1640E-06 | | X4Y: | -9,0013E-07 | | X2Y3: | -7,1391 E-07 |
| Y5: | -2,5311 E-07 | | X6: | 2,1008E-07 | | X4Y2: | 1,0556E-08 |
| X2Y4: | 1,3341E-08 | | Y6: | 5,3998E-09 | | | |
| X2Y: | -2,3237E-04 | | Y3: | -7,7885E-05 | | X4Y: | 4,9977E-07 |
| X2Y3: | 3,2674E-07 | | Y5: | 9,9591 E-08 | | X6Y: | -1,3006E-09 |
| X4Y3: | -1,1181E-09 | | X2Y5: | -6,7032E-10 | | Y7: | -1,6929E-10 |

In Tabelle 8 schließlich sind die Brechzahlen der optischen Medien, die für dieses Ausführungsbeispiel verwendet wurden, angegeben.

Tabelle 8: Im Beispiel gemäß Fig. 5 verwendete Glassorten

| Glassorte/ Medium | λ [nm] | 850,00 | 643,85 | 546,07 | 479,99 | 435,83 | 404,00 | 365,00 |
|---|---|---|---|---|---|---|---|---|
| Wasser | | 1,3269 | 1,3312 | 1,3342 | 1,3372 | 1,3399 | 1,3425 | 1,3466 |
| K5 | | 1,5151 | 1,5202 | 1,5246 | 1,5291 | 1,5334 | 1,5374 | 1,5441 |
| SFPL53 | | 1,4348 | 1,4376 | 1,4399 | 1,4422 | 1,4444 | 1,4465 | 1,4499 |
| NLASF44 | | 1,7901 | 1,7998 | 1,8083 | 1,8173 | 1,8259 | 1,8342 | 1,8481 |
| NKZFS11 | | 1,6255 | 1,6340 | 1,6413 | 1,6492 | 1,6567 | 1,6640 | 1,6764 |
| SNBH53 | | 1,7203 | 1,7324 | 1,7434 | 1,7556 | 1,7677 | 1,7798 | 1,8013 |
| NKZFS2 | | 1,5495 | 1,5557 | 1,5608 | 1,5661 | 1,5711 | 1,5759 | 1,5838 |
| NKZFS4 | | 1,6021 | 1,6099 | 1,6166 | 1,6238 | 1,6307 | 1,6374 | 1,6487 |
| NKZFS8 | | 1,7042 | 1,7153 | 1,7254 | 1,7364 | 1,7472 | 1,7580 | 1,7769 |
| NLAK8 | | 1,7019 | 1,7096 | 1,7162 | 1,7230 | 1,7294 | 1,7354 | 1,7457 |
| NBALF4 | | 1,5707 | 1,5768 | 1,5821 | 1,5877 | 1,5930 | 1,5981 | 1,6066 |
| NBK7 | | 1,5098 | 1,5147 | 1,5187 | 1,5228 | 1,5267 | 1,5303 | 1,5363 |

**Bezugszeichenliste**

1 Probengefäß
2 Medium
3 Probe
4 Bezugsfläche
5 Beleuchtungsobjektiv
6 optische Achse
7 Detektionsobjektiv
8 optische Achse
9 erster Wellenfrontmanipulator
10 erste Detektionslinsengruppe
11 zweite Detektionslinsengruppe
12 Gefäßboden
13 Aperturblende
14 weiterer Wellenfrontmanipulator
β Beleuchtungswinkel
δ Detektionswinkel

**Patentansprüche**

1. Anordnung zur Lichtblattmikroskopie, umfassend

- eine Beleuchtungsoptik mit einem Beleuchtungsobjektiv (5) zur Beleuchtung einer auf einem Probenträger in einem Medium (2) befindlichen Probe (3) über einen Beleuchtungsstrahlengang mit einem Lichtblatt, wobei die optische Achse (6) des Beleuchtungsobjektivs (5) und das Lichtblatt in einer Ebene liege, die mit der Normalen einer ebenen Bezugsfläche (4), hinsichtlich welcher der Probenträger ausgerichtet ist, einen von Null verschiedenen Beleuchtungswinkel (β) einschließt,
- eine Detektionsoptik mit einem Detektionsobjektiv (7) in einem Detektionsstrahlengang, dessen optische Achse (8) mit der Normalen der Bezugsfläche (4) einen von Null verschiedenen Detektionswinkel (δ) einschließt,

- ein Trennschichtsystem mit mindestens einer Schicht aus einem vorgegebenen Material mit vorgegebener Dicke, welche das Medium (2) von dem Beleuchtungsobjektiv (5) und dem Detektionsobjektiv (7) trennt, wobei das Trennschichtsystem mit einer parallel zur Bezugsfläche (4) ausgerichteten Grundfläche zumindest in dem für das Beleuchtungsobjektiv (5) und das Detektionsobjektiv (7) für Beleuchtung bzw. Detektion zugänglichen Bereich mit dem Medium (2) in Kontakt steht, **dadurch gekennzeichnet, dass**
- das Detektionsobjektiv (7) ein im Strahlengang angeordnetes oder in diesen einbringbares erstes adaptives optisches Detektionskorrekturelement umfasst und / oder
- das Beleuchtungsobjektiv (5) ein im Strahlengang angeordnetes oder in diesen einbringbares erstes adaptives optisches Beleuchtungskorrekturelement umfasst,
- mit welchen Aberrationen, die aufgrund des schrägen Durchtritts von zu detektierendem Licht bzw. von Licht zur Beleuchtung der Probe durch Grenzflächen des Trennschichtsystems entstehen, für einen vorgegebenen Bereich von Detektionswinkeln ($\delta$) bzw. von Beleuchtungswinkeln ($\beta$) und/oder für einen vorgegebenen Bereich von der Dicke der mindestens einen Schicht des Trennschichtsystems verringerbar sind.

2. Anordnung nach Anspruch 1, **dadurch gekennzeichnet, dass**

   - das Detektionsobjektiv (7) eine erste Detektionslinsengruppe (10), welche ein objektseitiges Bildfeld mindestens näherungsweise ins Unendliche abbildet, und eine zweite Detektionslinsengruppe (11) umfasst, wobei das erste adaptive optische Detektionskorrekturelement zwischen erster Detektionslinsengruppe (10) und zweiter Detektionslinsengruppe (11) angeordnet ist, und/oder
   - dass das Beleuchtungsobjektiv (5) eine erste Beleuchtungslinsengruppe, welche ein objektseitiges Bildfeld mindestens näherungsweise ins Unendliche abbildet, und eine zweite Beleuchtungslinsengruppeumfasst, wobei das erste adaptive optische Beleuchtungskorrekturelement zwischen erster und zweiter Beleuchtungslinsengruppe angeordnet ist.

3. Anordnung nach Anspruch 1 oder 2, **dadurch gekennzeichnet, dass** das Detektionsobjektiv (7) eine Detektionskorrekturlinse zur Korrektur von Aberrationen bei vorgegebenem Detektionswinkel ($\delta$) und vorgegebener Dicke der Schicht des Trennschichtsystems umfasst, welche bevorzugt mit mindestens einer Freiformfläche ausgebildet ist und/oder in den Strahlengang des Detektionsobjektivs (7) einschwenkbar ausgebildet ist,

   - und/oder dass das Beleuchtungsobjektiv (5) eine Beleuchtungskorrekturlinse zur Korrektur von Aberrationen bei vorgegebenem Beleuchtungswinkel ($\beta$) und vorgegebener Dicke der Schicht des Trennschichtsystems umfasst, welche bevorzugt mit mindestens einer Freiformfläche ausgebildet ist und/oder in den Strahlengang des Beleuchtungsobjektivs (5) einschwenkbar ausgebildet ist, und
   - das erste adaptive optische Detektionskorrekturelement bzw. das erste adaptive optische Beleuchtungskorrekturelement zur Korrektur von Aberrationen, die aufgrund von Abweichungen von der vorgegebenen Dicke und/oder von dem vorgegebenen Anstellwinkel auftreten, ausgelegt ist.

4. Anordnung nach einem der Ansprüche 1 bis 3, **dadurch gekennzeichnet, dass** das Detektionsobjektiv (7) mindestens ein weiteres, in den Strahlengang einbringbares oder darin angeordnetes adaptives optisches Detektionskorrekturelement und/oder das Beleuchtungsobjektiv (5) mindestens ein weiteres, in den Strahlengang einbringbares oder darin angeordnetes adaptives optisches Beleuchtungskorrekturelement umfasst, wobei das weitere adaptive optische Detektions- bzw. Beleuchtungskorrekturelement zur Korrektur von Aberrationen, die durch Änderungen der optischen Eigenschaften eines Immersionsmediums oder des Trennschichtsystems, oder bei der Fokussierung auf andere Objektschnittweiten auftreten, oder zur Innenfokussierung bei gleichzeitiger Korrektur von bei Fokusänderung auftretenden sphärischen Aberrationen, oder zur Erhöhung der Tiefenschärfe ausgelegt ist.

5. Anordnung nach einem der Ansprüche 1 bis 4, **dadurch gekennzeichnet, dass** das erste und das mindestens eine weitere adaptive optische Detektionskorrekturelement und / oder das erste und das mindestens eine weitere adaptive optische Beleuchtungskorrekturelement als Wellenfrontmanipulatoren (9, 14) ausgebildet sind, wobei jeder der Wellenfrontmanipulatoren (9, 14) bevorzugt zwei lateral zur optischen Achse gegeneinander bewegliche Freiformflächen oder zwei gegenläufig um eine zur optischen Achse senkrechte Drehachse rotierbare Freiformflächen umfasst.

6. Anordnung nach Anspruch 5, **dadurch gekennzeichnet, dass** zwischen den gegeneinander beweglichen Freiformflächen jeweils ein Immersionsmedium eingebracht ist, wobei bevorzugt bei einer mittleren Wellenlänge eines betrachteten Spektralbereichs für die optisch wirksamen Materialien der Wellenfrontmanipulatoren mit einem Brechungsindex $n_1$ und einer Abbeschen Zahl $v_1$ und des Immersionsmediums mit einem Brechungsindex $n_2$ und einer

Abbeschen Zahl $v_2$ die Bedingung

$$\left| \frac{n_1 - 1}{v_1} - \frac{n_2 - 1}{v_2} \right| \leq 0,05$$

erfüllt ist, und/oder die Bedingungen $|n_1 - n_2| \leq 0,05$ und $|v_1 - v_2| \geq 5$ gleichzeitig erfüllt sind.

7. Anordnung nach Anspruch 5 oder 6, **dadurch gekennzeichnet, dass** die optischen Elemente, an welchen die Freiformflächen ausgebildet sind, aus einem Material mit anormaler Teildispersion gefertigt sind und / oder das Immersionsmedium einen von der Normalgeraden abweichenden Dispersionsverlauf aufweist.

8. Anordnung nach einem der Ansprüche 2 bis 7, **dadurch gekennzeichnet, dass** die erste Detektionslinsengruppe (10) und die mindestens eine Schicht des Trennschichtsystems bzw. die erste Beleuchtungslinsengruppe und die mindestens eine Schicht des Trennschichtsystems jeweils ein optisches System bilden, welches im Wesentlichen die Bedingung

$$h_1 = f_{FG} \cdot \sin \sigma_0 = n_0 \cdot f'_{FG} \cdot \sin \sigma_0$$

erfüllt, wobei $h_1$ die Einfallshöhe des Öffnungsstrahls am Wellenfrontmanipulator, $\sigma_0$ der Strahlneigungswinkel des Randstrahls gegen die optische Achse, $f_{FG} = -n_0 * f'_{FG}$ die vordere, objektseitige Brennweite der Frontlinsengruppe und $n_0$ der Brechungsindex des Immersionsmediums zwischen Objekt und Frontlinse ist.

9. Mikroskopobjektiv für die Lichtblattmikroskopie, umfassend

   - eine erste Linsengruppe, welche ein objektseitiges Bildfeld mindestens näherungsweise ins Unendliche abbildet,
   - eine der ersten Linsengruppe nachgeordnete Aperturblende,
   - eine der Aperturblende nachgeordnete zweite Linsengruppe, **dadurch gekennzeichnet, dass**
   - zwischen erster Linsengruppe und zweiter Linsengruppe ein erstes adaptives optisches Abbildungskorrekturelement angeordnet oder dorthin einbringbar ist, mit welchem Aberrationen, die aufgrund eines schrägen Durchtritts von Licht zur Detektion oder Beleuchtung der Probe durch ein Probenträger entstehen, für einen vorgegebenen Bereich von Anstellwinkeln zur Normalen des Probenträgers und/oder für einen vorgegebenen Bereich von Dicken des Probenträgers verringerbar sind.

10. Mikroskopobjektiv nach Anspruch 9, umfassend mindestens ein weiteres, zwischen den beiden Linsengruppen angeordnetes oder zwischen die beiden Linsengruppen einbringbares adaptives optisches Abbildungskorrekturelement, das zur Korrektur von Aberrationen, die durch Änderungen der optischen Eigenschaften eines Immersionsmediums oder des Trennschichtsystems, oder bei der Fokussierung auf andere Objektschnittweiten auftreten, oder zur Erhöhung der Tiefenschärfe ausgelegt ist.

11. Mikroskopobjektiv nach Anspruch 10, **dadurch gekennzeichnet, dass** das erste und das weitere adaptive optische Abbildungselement als Wellenfrontmanipulatoren ausgebildet sind, wobei jeder der Wellenfrontmanipulatoren bevorzugt zwei lateral zur optischen Achse gegeneinander bewegliche Freiformflächen oder zwei gegenläufig um eine zur optischen Achse senkrechte Drehachse rotierbare Freiformflächen umfasst.

12. Mikroskopobjektiv nach Anspruch 11, **dadurch gekennzeichnet, dass** zwischen den gegeneinander beweglichen Freiformflächen jeweils ein Immersionsmedium eingebracht ist, wobei bevorzugt bei einer mittleren Wellenlänge eines betrachteten Spektralbereichs für die optisch wirksamen Materialien der Wellenfrontmanipulatoren mit einem Brechungsindex $n_1$ und einer Abbeschen Zahl $v_1$ und des Immersionsmediums mit einem Brechungsindex $n_2$ und einer Abbeschen Zahl $v_2$ die Bedingung

$$\left| \frac{n_1 - 1}{v_1} - \frac{n_2 - 1}{v_2} \right| \leq 0,05$$

erfüllt ist, und/oder die Bedingungen |n$_1$ - n$_2$| $\leq$ 0,05 und |v$_1$ - v$_2$| $\geq$ 5 gleichzeitig erfüllt sind.

13. Mikroskopobjektiv nach Anspruch 11 oder 12, **dadurch gekennzeichnet, dass** die optischen Elemente, an welchen die Freiformflächen ausgebildet sind, aus einem Material mit anormaler Teildispersion gefertigt sind und / oder das Immersionsmedium einen von der Normalgeraden abweichenden Dispersionsverlauf aufweist.

**Claims**

1. Arrangement for light sheet microscopy, comprising

   - an illumination optical unit with an illumination objective (5) for illuminating a sample (3), which is situated on a sample carrier in a medium (2), with a light sheet via an illumination beam path, wherein the optical axis (6) of the illumination objective (5) and the light sheet are located in a plane which includes an illumination angle ($\beta$) that differs from zero with the normal of a plane reference surface (4), in respect of which the sample carrier is aligned,
   - a detection optical unit comprising a detection objective (7) in a detection beam path, the optical axis (8) of which includes a detection angle ($\delta$) that differs from zero with the normal of the reference surface (4),
   - a separation layer system comprising at least one layer made of a specified material with a specified thickness, which separates the medium (2) from the illumination objective (5) and the detection objective (7), wherein the separation layer system is in contact with the medium (2), at least in the region accessible to the illumination objective (5) and the detection objective (7) for illumination and detection purposes, respectively, with a base aligned parallel to the reference surface (4), **characterized in that**
   - the detection objective (7) comprises a first adaptive optical detection correction element arranged in or introducible into the beam path and/or
   - the illumination objective (5) comprises a first adaptive optical illumination correction element arranged in or introducible into the beam path,
   - by means of which aberrations, which arise on account of the oblique passage through interfaces of the separation layer system of light to be detected or of light for illuminating the sample, are reducible for a specified range of detection angles ($\delta$) or illumination angles ($\beta$) and/or for a specified range of the thickness of the at least one layer of the layer separation system.

2. Arrangement according to Claim 1, **characterized in that**

   - the detection objective (7) comprises a first detection lens group (10), which at least approximately images an object-side image field to infinity, and a second detection lens group (11), wherein the first adaptive optical detection correction element is arranged between the first detection lens group (10) and second detection lens group (11), and/or
   - **in that** the illumination objective (5) comprises a first illumination lens group, which at least approximately images an object-side image field to infinity, and a second illumination lens group, wherein the first adaptive optical illumination correction element is arranged between the first and second illumination lens group.

3. Arrangement according to Claim 1 or 2, **characterized in that** the detection objective (7) comprises a detection correction lens for correcting aberrations at a specified detection angle ($\delta$) and a specified thickness of the layer of the separation layer system, which lens is preferably embodied with at least one free-form surface and/or is embodied to be pivotable into the beam path of the detection objective (7),

   - and/or **in that** the illumination objective (5) comprises an illumination correction lens for correcting aberrations at a specified illumination angle ($\beta$) and a specified thickness of the layer of the separation layer system, which lens is preferably embodied with at least one free-form surface and/or is embodied to be pivotable into the beam path of the illumination objective (5), and
   - the first adaptive optical detection correction element or the first adaptive optical illumination correction element is designed to correct aberrations which occur on account of deviations from the specified thickness and/or the specified angle of incidence.

4. Arrangement according to any one of Claims 1 to 3, **characterized in that** the detection objective (7) comprises at least one further adaptive optical detection correction element that is introducible into or arranged in the beam path and/or the illumination objective (5) comprises at least one further adaptive optical illumination correction element that is introducible into or arranged in the beam path, wherein the further adaptive optical detection or illumination correction element is designed for correcting aberrations which arise from changes in the optical properties of an immersion medium or of the separation layer system or when focusing to other front focal distances or for internal focusing while simultaneously correcting spherical aberrations occurring when the focus is changed or for increasing the depth of field.

5. Arrangement according to any one of Claims 1 to 4, **characterized in that** the first and the at least one further adaptive optical detection correction element and/or the first and the at least one further adaptive optical illumination correction element are embodied as wavefront manipulators (9, 14), wherein each of the wavefront manipulators (9, 14) preferably comprises two free-form surfaces that are movable with respect to one another laterally in relation to the optical axis or two free-form surfaces that are rotatable about an axis of rotation perpendicular to the optical axis.

6. Arrangement according to Claim 5, **characterized in that** an immersion medium is respectively introduced between the free-form surfaces that are movable relative to one another, wherein the condition

$$\left| \frac{n_1 - 1}{v_1} - \frac{n_2 - 1}{v_2} \right| \leq 0.05$$

is preferably satisfied at a mid wavelength of a considered spectral range for the optically effective materials of the wavefront manipulators with a refractive index $n_1$ and an Abbe number $v_1$ and of the immersion medium with a refractive index $n_2$ and an Abbe number $v_2$ and/or the conditions $|n_1 - n_2| \leq 0.05$ and $|v_1 - v_2| \geq 5$ are satisfied simultaneously.

7. Arrangement according to Claim 5 or 6, **characterized in that** the optical elements on which the free-form surfaces are formed are manufactured from a material with anomalous partial dispersion and/or the immersion medium has a dispersion curve that deviates from the normal straight line.

8. Arrangement according to any one of Claims 2 to 7, **characterized in that** the first detection lens group (10) and the at least one layer of the separation layer system or the first illumination lens group and the at least one layer of the separation layer system each form an optical system, which substantially satisfies the condition:

$$h_1 = f_{FG} \cdot \sin \sigma_0 = n_0 \cdot f'_{FG} \cdot \sin \sigma_0$$

where $h_1$ is the incidence height of the aperture ray at the wavefront manipulator, $\sigma_0$ is the beam inclination angle of the marginal ray with respect to the optical axis, $f_{FG} = -n_0 * f'_{FG}$ is the front, optical-side focal length of the front lens group and $n_0$ is the refractive index of the immersion medium between object and front lens.

9. Microscope objective for light sheet microscopy, comprising:

- a first lens group, which at least approximately images an object-side image field to infinity,
- an aperture stop disposed downstream of the first lens group,
- a second lens group disposed downstream of the aperture stop, **characterized in that**
- a first adaptive optical imaging correction element is arranged or introducible between a first lens group and second lens group, by means of which first adaptive optical imaging correction element aberrations, which arise on account of the oblique passage of light for detecting or illuminating the sample through a sample carrier, are reducible for a specified range of angles of incidence with respect to the normal of the sample carrier and/or for a specified range of the thickness of the sample carrier.

10. Microscope objective according to Claim 9, comprising at least one further adaptive optical imaging correction element arranged between the two lens groups or introducible between the two lens groups, said further adaptive optical imaging correction element being designed for correcting aberrations which arise due to the changes in the optical properties of an immersion medium or of the separation layer system or when focusing to different front focal lengths or for increasing the depth of field.

11. Microscope objective according to Claim 10, **characterized in that** the first and the further adaptive optical imaging element are embodied as wavefront manipulators, wherein each of the wavefront manipulators preferably comprises two free-form surfaces that are movable with respect to one another laterally in relation to the optical axis or two free-form surfaces that are rotatable about an axis of rotation perpendicular to the optical axis.

12. Microscope objective according to Claim 11, **characterized in that** an immersion medium is respectively introduced between the free-form surfaces that are movable relative to one another, wherein the condition

$$\left| \frac{n_1 - 1}{v_1} - \frac{n_2 - 1}{v_2} \right| \leq 0.05$$

is preferably satisfied at a mid wavelength of a considered spectral range for the optically effective materials of the wavefront manipulators with a refractive index $n_1$ and an Abbe number $v_1$ and of the immersion medium with a refractive index $n_2$ and an Abbe number $v_2$ and/or the conditions $|n_1 - n_2| \leq 0.05$ and $|v_1 - v_2| \geq 5$ are satisfied simultaneously.

13. Microscope objective according to Claim 11 or 12, **characterized in that** that the optical elements on which the free-form surfaces are formed are manufactured from a material with anomalous partial dispersion and/or the immersion medium has a dispersion curve that deviates from the normal straight line.

**Revendications**

1.  Arrangement de microscopie à lame de lumière, comportant

    - une optique d'éclairage comprenant un objectif d'éclairage (5) destiné à éclairer un échantillon (3) qui se trouve dans un milieu (2) sur un porte-échantillon par le biais d'un trajet de rayon d'éclairage comprenant une lame de lumière, l'axe optique (6) de l'objectif d'éclairage (5) et la lame de lumière se trouvant dans un plan qui, avec la normale à une surface de référence (4) plane par rapport à laquelle est orienté le porte-échantillon, forme un angle d'éclairage ($\beta$) différent de zéro,
    - une optique de détection comprenant un objectif de détection (7) dans un trajet de rayon de détection dont l'axe optique (8) forme, avec la normale à la surface de référence (4), un angle de détection ($\delta$) différent de zéro,
    - un système de couche de séparation comprenant au moins une couche en un matériau prédéfini ayant une épaisseur prédéfinie, laquelle sépare le milieu (2) de l'objectif d'éclairage (5) et de l'objectif de détection (7), le système de couche de séparation se trouvant en contact avec le milieu (2) par une surface de base orientée parallèlement à la surface de référence (4) au moins dans la zone accessible à l'objectif d'éclairage (5) et à l'objectif de détection (7) pour l'éclairage ou la détection, **caractérisé en ce que**
    - l'objectif de détection (7) comporte un premier élément de correction de détection optique adaptatif disposé ou pouvant être introduit dans le trajet de rayon et/ou
    - l'objectif d'éclairage (5) comporte un premier élément de correction d'éclairage optique adaptatif disposé ou pouvant être introduit dans le trajet de rayon et/ou
    - avec lesquels les aberrations, qui se produisent en raison de la traversée en biais de la lumière servant à détecter ou de la lumière servant à l'éclairage de l'échantillon à travers les surfaces interfaciales du système de couche de séparation, peuvent être réduites pour une plage prédéfinie d'angles de détection ($\delta$) ou d'angles d'éclairage ($\beta$) et/ou pour une plage prédéfinie des épaisseurs de l'au moins une couche du système de couche de séparation.

2.  Arrangement selon la revendication 1, **caractérisé en ce que**

    - l'objectif de détection (7) comporte un premier groupe de lentilles de détection (10), lequel représente un champ d'image côté objet au moins approximativement dans l'infini, et un deuxième groupe de lentilles de détection (11), le premier élément de correction de détection optique adaptatif étant disposé entre le premier groupe de lentilles de détection (10) et le deuxième groupe de lentilles de détection (11), et/ou
    - **en ce que** l'objectif d'éclairage (5) comporte un premier groupe de lentilles d'éclairage, lequel représente un champ d'image côté objet au moins approximativement dans l'infini, et un deuxième groupe de lentilles d'éclairage, le premier élément de correction d'éclairage optique adaptatif étant disposé entre le premier et le deuxième groupe de lentilles d'éclairage.

3.  Arrangement selon la revendication 1 ou 2, **caractérisé en ce que** l'objectif de détection (7) comporte une lentille de correction de détection destinée à corriger les aberrations à un angle de détection (δ) prédéfini et une épaisseur prédéfinie du système de couche de séparation, lequel est de préférence configuré avec au moins une surface à forme libre et/ou est configuré pivotant dans le trajet de rayon de l'objectif de détection (7),

- et/ou **en ce que** l'objectif d'éclairage (5) comporte une lentille de correction d'éclairage destinée à corriger les aberrations à un angle d'éclairage (β) prédéfini et une épaisseur prédéfinie du système de couche de séparation, lequel est de préférence configuré avec au moins une surface à forme libre et/ou est configuré pivotant dans le trajet de rayon de l'objectif d'éclairage (5), et
- le premier élément de correction de détection optique adaptatif ou le premier élément de correction d'éclairage optique adaptatif est conçu pour corriger les aberrations qui se produisent en raison des écarts par rapport à l'épaisseur prédéfinie et/ou par rapport à l'angle d'incidence prédéfini.

4. Arrangement selon l'une des revendications 1 à 3, **caractérisé en ce que** l'objectif de détection (7) comporte au moins un autre élément de correction de détection optique adaptatif, pouvant être introduit ou étant disposé dans le trajet de rayon et/ou l'objectif d'éclairage (5) comporte au moins un autre élément de correction d'éclairage optique adaptatif, pouvant être introduit ou étant disposé dans le trajet de rayon, l'autre élément de correction de détection ou d'éclairage optique adaptatif étant conçu pour corriger les aberrations qui se produisent en raison des variations des propriétés optiques d'un milieu d'immersion ou du système de couche de séparation, ou lors de la mise au point sur des focales frontales d'objet différentes, ou pour la mise au point intérieure avec correction simultanée des aberrations sphériques qui se produisent lors d'un changement de mise au point, ou pour augmenter la profondeur de champ.

5. Arrangement selon l'une des revendications 1 à 4, **caractérisé en ce que** le premier et l'au moins un autre élément de correction de détection optique adaptatif et/ou le premier et l'au moins un autre élément de correction d'éclairage optique adaptatif sont réalisés sous la forme de manipulateurs de front d'onde (9, 14), chacun des manipulateurs de front d'onde (9, 14) comportant de préférence deux surfaces à forme libre mobiles l'une contre l'autre latéralement à l'axe optique ou deux surfaces à forme libre pouvant effectuer une rotation en sens inverse autour d'un axe de rotation perpendiculaire à l'axe optique.

6. Arrangement selon la revendication 5, **caractérisé en ce qu'**un milieu d'immersion est respectivement introduit entre les surfaces à forme libre mobiles l'une contre l'autre, la condition

$$\left| \frac{n_1 - 1}{v_1} - \frac{n_2 - 1}{v_2} \right| \le 0,05$$

étant vérifiée et/ou les relations $|n_1 - n_2| \le 0,05$ et $|v_1 - v_2| \ge 5$ étant vérifiées simultanément de préférence à une longueur d'onde moyenne d'une plage spectrale observée pour les matériaux optiquement actifs des manipulateurs de front d'onde avec un indice de réfraction $n_1$ et un nombre d'Abbe $v_1$ et du milieu d'immersion avec un indice de réfraction $n_2$ et un nombre d'Abbe $v_2$.

7. Arrangement selon la revendication 5 ou 6, **caractérisé en ce que** les éléments optiques au niveau desquels sont configurées les surfaces à forme libre sont fabriqués à partir d'un matériau ayant une dispersion partielle anormale et/ou le milieu d'immersion possède une courbe de dispersion s'écartant de la droite normale.

8. Arrangement selon l'une des revendications 2 à 7, **caractérisé en ce que** le premier groupe de lentilles de détection (10) et l'au moins une couche du système de couche de séparation ou le premier groupe de lentilles d'éclairage et l'au moins une couche du système de couche de séparation forment respectivement un système optique qui vérifie sensiblement la condition

$$h_1 = f_{FG} \cdot \sin \sigma_0 = n_0 \cdot f'_{FG} \cdot \sin \sigma_0 \text{ ,}$$

$h_1$ étant la hauteur d'incidence du rayon d'ouverture au niveau du manipulateur de front d'onde, $\sigma_0$ l'angle d'inclinaison de rayon du rayon marginal par rapport à l'axe optique, $f_{FG} = -n_0 \cdot f_{FG}$ la distance focale avant côté objet du groupe de lentilles frontal et $n_0$ l'indice de réfraction du milieu d'immersion entre l'objet et la lentille frontale.

9. Objectif de microscope pour la microscopie à lame de lumière, comportant

- un premier groupe de lentilles, lequel représente un champ d'image côté objet au moins approximativement dans l'infini,
- un diaphragme d'ouverture disposé à la suite du premier groupe de lentilles,
- un deuxième groupe de lentilles disposé à la suite du diaphragme d'ouverture, **caractérisé en ce que**
- un premier élément de correction de détection optique adaptatif est disposé entre le premier groupe de lentilles et le deuxième groupe de lentilles ou peut y être introduit, avec lequel les aberrations, qui se produisent en raison d'une traversée en biais de la lumière servant à détecter ou à l'éclairage de l'échantillon à travers un porte-échantillon, peuvent être réduites pour une plage prédéfinie d'angles d'incidence par rapport à la normale du porte-échantillon et/ou pour une plage prédéfinie des épaisseurs du porte-échantillon.

10. Objectif de microscope selon la revendication 9, comportant au moins un autre élément de correction de détection optique adaptatif disposé ou pouvant être introduit entre les deux groupes de lentilles, lequel est conçu pour corriger les aberrations qui se produisent en raison des variations des propriétés optiques d'un milieu d'immersion ou du système de couche de séparation, ou lors de la mise au point sur des focales frontales d'objet différentes, ou pour augmenter la profondeur de champ.

11. Objectif de microscope selon la revendication 10, **caractérisé en ce que** le premier et l'autre élément de correction de détection optique adaptatif sont réalisés sous la forme de manipulateurs de front d'onde, chacun des manipulateurs de front d'onde comportant de préférence deux surfaces à forme libre mobiles l'une contre l'autre latéralement à l'axe optique ou deux surfaces à forme libre pouvant effectuer une rotation en sens inverse autour d'un axe de rotation perpendiculaire à l'axe optique.

12. Objectif de microscope selon la revendication 11, **caractérisé en ce qu'**un milieu d'immersion est respectivement introduit entre les surfaces à forme libre mobiles l'une contre l'autre, la condition

$$\left| \frac{n_1 - 1}{v_1} - \frac{n_2 - 1}{v_2} \right| \leq 0,05$$

étant vérifiée et/ou les relations $|n_1 - n_2| \leq 0,05$ et $|v_1 - v_2| \geq 5$ étant vérifiées simultanément de préférence à une longueur d'onde moyenne d'une plage spectrale observée pour les matériaux optiquement actifs des manipulateurs de front d'onde avec un indice de réfraction $n_1$ et un nombre d'Abbe $v_1$ et du milieu d'immersion avec un indice de réfraction $n_2$ et un nombre d'Abbe $v_2$.

13. Objectif de microscope selon la revendication 11 ou 12, **caractérisé en ce que** les éléments optiques au niveau desquels sont configurées les surfaces à forme libre sont fabriqués à partir d'un matériau ayant une dispersion partielle anormale et/ou le milieu d'immersion possède une courbe de dispersion s'écartant de la droite normale.

Fig.1

Fig.2

Fig.3

Fig.4a)

( X , Y )
1,00, 0,00
Relatives Feld
(-0,54°, 0,19°)

Y-Fächer

X-Fächer

-1,00, 0,00
Relatives Feld
( 0,54°, 0,19°)

0,00, 1,00
Relatives Feld
( 0,00°, -0,35°)

0,00, -1,00
Relatives Feld
( 0,00°, 0,74°)

0,00, 0,00
Relatives Feld
( 0,00°, 0,19°)

656 nm
587 nm
546 nm
486 nm
435 nm

Fig.4b)

( X , Y )

Y-Fächer

1,00,  0,00
Relatives Feld
(-0,54°,  0,15°)

X-Fächer

0,5

0,5

5

-0,5

-0,5

-1,00,  0,00
Relatives Feld
(0,54°,  0,15°)

0,5

0,5

4

-0,5

-0,5

0,00,  1,00
Relatives Feld
(0,00°, -0,39°)

0,5

0,5

3

-0,5

-0,5

0,00, -1,00
Relatives Feld
(0,00°,  0,69°)

0,5

0,5

2

-0,5

-0,5

0,00,  0,00
Relatives Feld
(0,00°,  0,15°)

0,5

0,5

1

-0,5

-0,5

———————————— 656 nm
-------------------------- 587 nm
·········································· 546 nm
—·—··—·—··—·—··—·— 486 nm
—··—··—··—··—··—·· 435 nm

Fig.4c)

Fig.5

( X , Y )
1,00, 0,00
Relatives Feld
(-0,16°, -0,05°)

Y-Fächer                                        X-Fächer

0,5                                               0,5

5

-0,5                                              -0,5

-1,00, 0,00
Relatives Feld
( 0,16°, -0,05°)

0,5                                               0,5

4

-0,5                                              -0,5

0,00, 1,00
Relatives Feld
( 0,00°, -0,21°)

0,5                                               0,5

3

-0,5                                              -0,5

0.00, -1.00
Relatives Feld
(0,00°, 0,11°)

0,5                                               0,5

2

-0,5                                              -0,5

0,00, 0,00
Relatives Feld
( 0,00°, -0,05°)

0,5                                               0,5

1

-0,5                                              -0,5

————————————————  850,00 nm
-----------------------------------  643,85 nm
......................................  546,07 nm
—·—·—·—·—·—·—·—·—  479,99 nm
—··—··—··—··—··—  435,83 nm
– – – – – – – – – –  404,00 nm
————————————————  365,00 nm

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0866993 B1
- DE 10257423 A1
- WO 2004052558 A1
- WO 2012110488 A1
- WO 2012122027 A1
- DE 102011000835 A1
- DE 102013112690
- DE 102013107297
- DE 102012101262 B3

**In der Beschreibung aufgeführte Nicht-Patentliteratur**

- **J. HUISKEN et al.** Selective Plane Illumination Microscopy Techniques in Developmental Biology. *Zeitschrift Development,* Januar 2009, vol. 336, 63